# EUROPÄISCHE PATENTSCHRIFT

(11) **EP 1 049 604 B1**
(45) Veröffentlichungstag und Bekanntmachung des Hinweises auf die Patenterteilung: **17.03.2004**
(21) Anmeldenummer: 99900858.4
(22) Anmeldetag: 26.01.1999
(51) Int. Cl.: B60P 1/64

(54) **WECHSELSTÜTZE SOWIE VERWENDUNG DERSELBEN**
SUPPORTING MEMBER WITH ALTERNATING POSITIONS AND ITS USE
MONTANTS A POSITIONS ALTERNANTES ET LEUR UTILISATION

(30) Priorität: 26.01.1998 CH 17998; 06.05.1998 DE 19820074
(43) Veröffentlichungstag der Anmeldung: 08.11.2000
(73) Patentinhaber: Lehner, Guido, 9403 Goldach (CH)
(72) Erfinder: Lehner, Guido, 9403 Goldach (CH)
(74) Vertreter: Ackermann, Ernst, Dipl.-Ing. HTL
(86) Internationale Anmeldenummer: PCT/CH1999/000034
(87) Internationale Veröffentlichungsnummer: WO 1999/037501

(56) Entgegenhaltungen:
- DE-A- 1 927 497
- DE-A- 2 239 718
- DE-A- 4 240 125
- DE-C- 456 468
- US-A- 4 378 191

## Beschreibung

### Technisches Gebiet

Die Erfindung betrifft eine Wechselstütze für Hoch- bzw. Tieflagen von Transportgütern auf Plattformen, insbesondere für einen Transportaufbau, wobei die Wechselstütze über eine Gelenkachse verschwenkbar, mit der Plattform sowie einer Zugvorrichtung verbunden bzw. verbindbar ist. Die Erfindung betrifft ferner die Verwendung der Wechselstütze.

### Stand der Technik

Die Erfindung geht aus von einem Wechselsystem, wie es in der WO97/13654 beschrieben ist. Der WO97/13654 lag die Aufgabe zugrunde, den Wechsel von einem Aufbau von einem Fahrzeug in die Funktion Stehzeug ohne besondere Hilfsmittel wie Kräne oder Gabelstapler an beliebigen Orten, also nicht nur am Heimterminal, durch eine Person durchführen zu können. Als Lösung wird vorgeschlagen, dass die Einrichtung eine Abhebe- und Absenkvorrichtung mit vier verteilten Lagerstellen zum synchronen Abheben und Absenken des Aufbaues aufweist. Ferner eine Einfangtrichter/Zentrierkegelkombination zum Einfangen und Schieben des Aufbaues mit dem Eigengewicht sowie definiertem Absetzen auf dem Fahrgestell. Als Abhebeund Absenkvorrichtung dienen vier am Fahrgestell montierte hydraulische Zylinder, welche über eine Steuerung von einer Hydraulikpumpe betätigt werden. Das Abheben und Absenken des Containers bzw. einer Plattform oder irgend eines Transportaufbaues erfolgt im wesentlichen senkrecht, relativ zu dem Fahrgestell und nicht zu dem Boden. Der Container, als Beispiel, wird an den gewünschten Ort mit einem Motorfahrzeug hingefahren, der Wechselcontainer mit einer kleinhubigen Abhebe- und Absenkvorrichtung etwa 20 bis 30 cm vom Fahrgestell abgehoben und dann die Bodenstützen in einer senkrechten Lage eingesetzt. Die vier Zylinder werden wieder zurückgefahren, wobei der Container gleichzeitig als Stehzeug auf die etwa meterlangen Bodenstützen abgestellt wird. Das Fahrzeug kann danach unter den Stützen ohne Container wegfahren. Beim Montieren des Containers auf einem Fahrzeug wird in der umgekehrten Reihenfolge vorgegangen. Entsprechende Wechselcontainer haben sich bereits im praktischen Einsatz bewährt. Mit einem zeitlichen Aufwand der im Bereich von Minuten liegt, kann z.B. ein Umzugcontainer für Hausrat am Ladeort hingestellt werden. Nach der Beladung wird der Container an den neuen Wohnort gefahren, ausgeladen und danach an einen weiteren Bestimmungsort gefahren. Bei vielen Einsatzarten wäre es nun aber ein Vorteil, wenn nicht nur ein Wechsel von Fahrzeug-Stehzeug vorgenommen, sondern wenn das Ladegut ganz oder wenigstens teilweise auf den Boden abgelassen werden könnte. Die Plattform sollte ebenso aus der Tieflage ohne Kran oder Gabelstapler wieder in eine Hochlage gehoben werden können, für das Aufladen bzw. montieren am Fahrzeug. Als naheliegendste Lösung bietet sich die Ausgestaltung der Bodenstützen als hydraulische Zylinder an, wie z.B. in der US-PS Nr. 3 541 598 vorgeschlagen wird. Wechselpritschen bzw. Container sind üblicherweise so konzipiert, dass sie sehr preisgünstig sind und unabhängig von dem Fahrzeug, meistens ohne eigene Energieversorgung, ihre Funktion erfüllen. Der Motor ist mit allen Übertriebsaggregaten am Fahrzeug angeordnet. Es können alle vier, als Hydraulik-Zylinder ausgebildete Bodenstützen von einem Hydraulikaggregat des Fahrzeuges aus mit Drucköl versorgt werden. Dabei müssten jedoch bei jedem Wechsel Hydraulikschläuche an- und abgehängt werden. Jedesmal besteht die Gefahr, dass etwas Hydrauliköl in die Umwelt verloren geht. Einer der Hauptzwecke von Containern liegt darin, dass ein möglichst grosser und preisgünstig herstellbarer Transportraum mit wenig Eigengewicht resp. dem maximalmöglichen Zuladegewicht geschaffen wird. Hydraulik-Zylinder haben als Nachteil ein beachtliches Gewicht, wenn Robustheit und Knicksicherheit bei grösseren Längen vorausgesetzt wird. Als Hydraulik-Zylinder ausgestaltete Bodenstützen haben sich in der Praxis nicht durchsetzen können.

### Darstellung der Erfindung

Der Erfindung wurde nun die Aufgabe gestellt, Ladegüter, sei es auf Plattformen, wie Transportaufbauten, Wechselpritschen oder Container ohne Fremdhebemittel in Bezug auf den Boden wahlweise in Hoch- und Tieflagen bringen zu können. Dabei soll in erster Linie, aber nicht nur, die Hochlage für Montage/Demontage auf bzw. von einem Fahrzeug und die Tieflage für ein kürzeres oder längeres Verweilen an einem Standort nutzbar sein. Ferner war es eine weitere Teilaufgabe, den Wechsel Stehzeug-Fahrzeug auf einfache Weise kombinieren zu können.

Die erfindungsgemässe Lösung ist dadurch gekennzeichnet, dass die Wechselstütze einen, über die Gelenkachse nach oben abstehenden Zughebel als Kraftarm aufweist und einen, in Bezug auf das wirksame Längenverhältnis Lastarm zu Kraftarm veränderbaren Hebel bildet, wobei für die Überwindung der grössten Zugkraftsituationen der Lastarm relativ verkürzt wird.

Bereits eine erste Versuchsmechanik zeigte sofort, dass mit der neuen Lösung ein bisher in der Praxis nicht ausgenütztes Bewegungsspiel mit günstigen Hebelverhältnissen sehr vorteilhaft miteinbezogen wird. Zum einen ist es die Gelenkfunktion, zum anderen die Möglichkeit der Hebelübersetzung. Bei der konkreten Ausgestaltung können denn auch vor allem drei Konzepte mit verhältnismässig geringem Aufwand realisiert werden:
- Ausgestaltung der Wechselstütze als Abrollschiene bzw. Bügel, als idealisierte Form,
- Ausgestaltung der Wechselstütze als Kniegelenk, oder
- Ausgestaltung der Wechselstütze als Vielfachgelenk.

In jedem Fall gelingt es mit geringem Materialaufwand das Anheben und Absenken von Transportgütern bzw. eines Transporthilfsmittels bzw. Gebindes oder Transportaufbaues gegenüber dem Boden mit Hebelübersetzungen zu erleichtern. Mit verhältnismässig kleinen Kräften können schwere Gewichte mit einer Zugvorrichtung des Fahrzeuges auf den Boden abgesenkt und wieder in eine Hochlage gebracht werden. Mit der neuen Lösung ist es gelungen, die Hebelgesetze über eine Wechselwirkung der Kräfte zwischen Fahrzeug und Transportgut in ganz besonders vorteilhafter Weise auszunutzen. Bekanntlich benötigen alle scherenartigen Lösungen in den Extremlagen extrem grosse Kräfte. Die neue Lösung optimiert dagegen das Verhältnis Lastarm/ Kraftarm in kräftemässig gerade in den ungünstigen Lagen. Es werden Kräfte und Gewichte von Seiten des Fahrzeuges selbst optimal miteinbezogen.

Für besonders vorteilhafte Ausgestaltungen wird auf die Ansprüche 2 bis 12 verwiesen. Die Erfindung erlaubt eine ganze Anzahl Ausgestaltungen. Die Wechselstützen werden bevorzugt als Kipphebelstützen mit einem oder mehreren Kniegelenken und die Gelenkachsen besonders bevorzugt parallel zu den Fahrzeugachsen ausgebildet. Als Verschwenkhilfsmittel werden bevorzugt Winden bzw. motorische Mittel genutzt, welche fest an dem Fahrzeug montiert sind. Sind die Gelenkachsen parallel zu den Fahrzeugachsen, so können mit Zugkräften in Fahrrichtung des Motorfahrzeuges die erforderlichen Verschwenkkräfte aufgebracht werden. Die Konsequenz hieraus ist nun aber, dass das Motorfahrzeug für die senkrechte Bewegung nicht mehr unter den Transportaufbau stehen muss, so dass einem totalen Absenken auf den Boden nichts mehr im Wege steht, dies im Gegensatz zu der Abhebe- und Absenkvorrichtung gemäss der einleitend erwähnten WO97/13654. Vorteilhafterweise weist jede Knie-Hebelstütze als Knickfuss wenigstens zwei, mit einem Gelenk verbundene Schenkel auf, wobei der innere Kniewinkel des Lastarmes durch Gelenkanschläge auf einen Winkel grösser 90° begrenzbar ist. Ferner ist es aber auch möglich, dass jede Bodenstütze zwei oder mehrere Gelenkstellen aufweist, wobei jeder Kniewinkel des Lastarmes durch Gelenkanschläge begrenzt ist. Ein reiner Wechsel von Stehzeug/Fahrzeug kann gemäss WO97/13654 durchgeführt werden. Dagegen wird die ganze oder teilweise Absenkung des Transportgutes auf den Boden gemäss der neuen Lösung durchgeführt.

Wie bereits erwähnt können die Wechselstützen im idealisierten Falle als Abrollschienen ausgebildet werden, welche ebenfalls einen über die Anlenkstelle an dem Aufbau hinaus verlängerten Zugarm aufweisen. Die Ausgestaltung als Abrollschiene hat den grossen Vorteil, dass die Kräfte im Verlaufe der Senk- und Hebbewegung fliessend wechseln und das Antriebssystem gleichmässiger belasten. Die Knickfuss- oder Gelenklösung hat den Vorteil, dass die Bodenstützen auf das kürzest mögliche Mass zusammenlegbar sind, was im Fahrzeugbereich sehr wichtig ist. Die Gelenke werden dafür in umgekehrtet Richtung zu der Zugbeanspruchung zueinanderklappbar ausgebildet. Die Kräfte von den Verschwenkhilfsmitteln können auf verschiedenste Weise bzw. über Handwinden Habegger, Hebelspanner usw. übertragen werden. Die Verschwenkbewegung kann durch Stossen oder Ziehen über mechanische, elektrische oder hydraulische Verschwenkhilfsmittel erfolgt. Gemäss einer sehr einfachen Lösung werden, wenn der Container als ganzes parallel zum Boden gesenkt und gehoben werden muss, die Bodenstützen auf beiden Seiten des Aufbaues durch einen Parallelzug verbunden, zur koordinierten Bewegung aller Bodenstützen. Die Verschwenkhilfsmittel werden als motorische bzw. hydraulische Hilfsmittel ausgebildet und am Motorfahrzeug fest verankert. Dazu ist es sehr vorteilhaft, wenn am Motorfahrzeug eine Verschiebesicherung angeordnet ist, die zwischen Bodenstützen und Motorfahrzeug einspannbar ist. Der erforderlichen Zugkraft für das Heben und Senken des Aufbaues wird auf diese Weise gegengewirkt, so dass weder das Motorfahrzeug noch der Transportaufbau sich durch die Verschwenkkräfte horizontal verschieben können. Die Verschiebesicherung kann als bewegliche Stange ausgebildet und/oder kombiniert mit einer Fahrzeugstütze in Einsatz gebracht werden. Sehr vorteilhaft ist es ferner, wenn die Verschwenkhilfsmittel wenigstens als Teilstück ein Zugseil aufweisen, welches vorteilhafterweise am hinteren Fahrzeugende geführt ist. Wenn das Motorfahrzeug auch nicht absolut fluchtend zu dem Aufbau steht, können mit dem Seil seitlich leicht abweichende Kräfte aufgefangen werden. Damit auch in den Extremlagen das Fahrwerk des Motorfahrzeuges nicht zu stark belastet wird, sollten die Verschwenkhilfsmittel sowie die Fahrzeugstütze ein gemeinsame Eingriffspunkte am Fahrzeug haben. Ferner kann die Bodenunterlage als Feder z.B. als Luftfeder ausgebildet werden, damit wenigstens das letzte Bewegungsstück beim Senken des Aufbaues auf den Boden als Energiespeicher nutzbar und das spätere Anheben erleichtert wird. Eine optimale Lösung ergibt sich, wenn beidseits des Motorfahrzeuges eine Verschiebesicherung und die Verschwenkhilfsmittel bevorzugt in der Längsmittelachse des Fahrzeuges angeordnet sind. Gemäss einer weiteren Ausgestaltung kann innerhalb eines Aufbaues oder Containers ein, gegebenenfalls sogar mehrere Zwischendecks angeordnet werden, welche gleicherweise über die neuen Wechselstützen heb- und absenkbar sind.

Die neue Lösung geht in zwei Richtungen und betrifft zwei Grundmanipulationen, die bis heute, vor allem zusammen, noch nie zweckmässig gelöst wurden. Es ist dies das völlige Absenken eines Containers auf den Boden ohne Kranhilfe, sowie das Aufladen eines Trasportaufbaues, gleichsam auf der grünen Wiese, auch hier ohne Kranhilfe oder Stapelfahrzeuge. Es ist eine Erfahrungstatsache, dass eine einzelne Person mit einfachen Hilfsmitteln, mehrere hundert kg bewegen kann. Sobald das Gewicht eine Tonne übersteigt, werden schon besondere Hilfsmittel benötigt. Dies gilt noch verstärkt, wenn es sich nicht nur um ein Gewicht von vielleicht 1 bis 3 Tonnen oder mehr handelt, sondern wenn das zu bewegende Objekt auch gross ist. Es ist erkannt worden, dass das Hinstellen eines Ladegutes noch einfach ist, wenn am Fahrzeug selbst Hebezeuge vorhanden sind. Das blosse Heben und Senken ist ebenfalls eine einfache Manipulation. Anders ist die Situation, wenn ein irgendwo auf den Boden über Stützen abgestellter Aufbau von z.Bsp. 2 bis 4 Tonnen oder viel mehr Gewicht und einigen Metern Länge millimetergenau auf ein Fahrgestell gebracht werden muss. Der Zweck der neuen Lösung liegt auch darin, dass die Transportmasse beim Absetzen mit ihrem eigenen Gewicht eingefangen und geschoben und in eine genau definierte Lage auf dem Fahrgestell abgesetzt werden kann. Da für das Aufladen das ganze Ladgegewicht ausgenützt wird, spielt das Gewicht an sich keine Rolle mehr. Der Vorgang kann deshalb durch eine einzige Person, ohne menschlichen Kraftakt problemlos durchgeführt werden, vor allem wenn die Hebeeinrichtung motorisch angetrieben und steuerbar ist. Der Schnellwechsel hat wie noch dargestellt werden wird, eine mehrfache Bedeutung. Es kann der Transportaufbau schnell von einem Fahrzeug zu einem Stehzeug gewechselt werden. Ferner kann auch die Art des Aufbaues oder aber ein erster z.Bsp. voller durch einen zweiten leeren schnell gewechselt werden. Der Einsatz ist bei Leichtfahrzeugen genau so möglich, wie bei schweren Transportfahrzeugen, dies mit Einschluss der Bodenabsenkung.

Die neue Lösung ist ferner durch eine Modulbauweise gekennzeichnet. Ein erstes Modul ist als Wechselbühne mit Lagerstellen sowie mit einer Abhebe- und Absenkvorrichtung ausgebildet. Ein zweites Modul ist als Querträger bzw. Querträgergruppe ausgebildet. Dieses kann als Bausatz an der Unterseite von einem Aufbau befestigt werden. Die beiden Module, das Wechselbühnenmodul und das Aufbaumodul, können nun in grösseren Serien preisgünstig hergestellt werden und den einzelnen Herstellern wie z.Bsp. Fahrzeugbauern oder Containerherstellern für den festen Einbau durch diese geliefert werden. Es ist erkannt worden, dass bei Ausnutzung des bisher vorhandenen Totraumes für den Einfederweg des Fahrgestelles besonders bei Leichtfahrzeugen viele Probleme des Standes der Technik gleichzeitig lösbar sind. Insbesondere kann die Wechselbühne in Leichtbauweise hergestellt werden, und reduziert das Zuladegewicht nur wenig. Die Wechselbühne ist besonders vorteilhaft für einen Fahrzeuganhänger, kann aber auch direkt an dem Motorfahrzeug selbst angebaut werden. Die Wechselbühne wird als Auflageplattform für den Aufbau ausgebildet, wobei eine kleinhubige Abhebe- und Absenkvorrichtung fest an der Wechselbühne angeordnet ist. Besonders bevorzugt weist die Wechselbühne wenigstens je zwei Längs- und Quertraversen mit einem Längs- und Querverstellbereich auf, zur Anpassung an verschiedenste Fahrgestelle. An einem zusätzlichen mittleren Längsholmen der Wechselbühne können z.Bsp. das Aggregat für den motorischen Antrieb, die Steuerleitungen und die Steuerelemente für die Abhebe- und Absenkvorrichtung aufgehängt werden. Die Längs- und Quertraversen können als Steckprofile ausgebildet werden, wobei die Längstraversen eine Anzahl Ausnehmungen aufweisen, für das Einschieben auf ein beliebiges Breitenmass in Bezug auf die Längstraversen. Diese Lösung gestattet in der Breite, innerhalb eines Maximums und eines Minimums, jedes beliebige Mass einzustellen. Das gegebenenfalls überstehende Ende kann vom Fahrzeugbauer abgeschnitten werden.

Vorteilhafterweise weist der Aufbau wenigstens zwei fest angebrachte Auflagequerträger auf, an denen wahlweise Bodenstützen, sei es als in sich steife Stützen oder als Kipphebelstützen oder Knickfüsse anbringbar sind, für einen schnellen Wechsel des Aufbaues als Stehzeug oder als Teil des Fahrzeuges und das Absenken auf den Boden. Es ist aber auch möglich drei oder mehr Auflagequerträger anzuordnen. Eine Hattesicherung kann über die motorischen Antriebsmittel betätigt werden und die Verbindung lösen bzw. öffnen. Die Auflagequerträger des Aufbaues weisen je zwei, vorzugsweise ebene Stützflächen sowie einen mittleren Zentriertrichter auf, wobei den Stützflächen je eine Hebeeinrichtung und den Zentriervorrichtungen je ein Zentrierbolzen zugeordnet ist, welche an der Wechselbühne fixiert sind. Werden drei oder mehr Auflagetrager eingesetzt, so können allen entsprechenden Stützflächen je eine Hebeeinrichtung, bevorzugt als hydraulisch betätigbarer Zylinder, zugeordnet werden. Es werden den zwei äusseren Auflagequerträgern je eine mittlere Zentriervorrichtung zugeordnet, also im ganzen für einen Aufbau bevorzugt zwei Zentriervorrichtungen. Die neue Lösung gestattet ferner an den Quer- und Längstraversen Seitenverkleidungsteile zu befestigen, wobei die Länge der Quer- und Längstraversen jeweils dem konkreten Fahrgestell entsprechend angepasst bzw. gekürzt werden. Erfindungsgemäss kann irgend eine Ladefläche bzw. ein Aufbau nach Bedarf wahlweise fest auf den Boden abgestützt oder mit einem, vorzugsweise unter den Aufbau schiebbaren Fahrgestell verbunden werden. Dabei wird die Plattform durch eine am Fahrgestell angeordnete Abhebe- und Absenkeinrichtung auf das Fahrgestell abgesetzt bzw. vom Fahrgestell abgehoben und kann dann durch ein leichtes Motorfahrzeug transportiert werden. Der Aufbau bzw. die Plattform mit irgend einem Aufbau bekommt gemäss der neuen Lösung die Funktion einer Zuladung und muss den entsprechenden Verkehrsregeln entsprechen. Die Wechselbühne wird möglichst leicht gebaut, da sonst das freie Zuladegewicht eingeschränkt wird. Von dem Erfinder ist ferner erkannt worden, dass bisher grosse Bereiche des Warenhandlings nicht genügend beachtet wurden. Es sind dies der Umschlag von sperrigen, leichten Stückgüter und ganz besonders der Faktor Zeit. Selbst grösste Volumen werdenschnell über weite Distanzen zu transportieren. Sind die Güter am Zielort, beginnen aber erst die Probleme, da die Übernahme von grossen Volumen oft gar nicht mehr im voraus planbar ist. Das Fahrzeug muss dann zu lange am Zielort stillstehen, so dass aus einem Fahrzeug ein sehr teures Stehzeug wird. Mit der neuen Erfindung wird ganz besonders die Zeitproblematik auf sehr oekonomische Weise gelöst, dadurch dass verschiedene Schwerpunkte in Kombination vorgeschlagen werden: Bei Leichtgüter kann das Fahrgestell durch ein Kleinlastwagen von z.Bsp. 3,5 oder 7 Tonnen oder ein leichtes Motorfahrzeug wie Lieferwagen, zugstarke Jeeps usw. von Ort zu Ort verschoben werden. Dabei kann auch das Motorfahrzeug selbst erfindungsgemäss ausgebildet werden. Die Ladefläche kann mittels einfachen Stützen gemäss WO97/13654 auf den Boden abgestellt oder mit einem Fahrgestell verbunden werden. Das Fahrgestell kann die fest auf dem Boden abgestützte Plattform unterfahren. Das Fahrgestell weist selbst eine kleinhubige Abhebe- und Absenkvorrichtung auf, und versetzt den Fahrer in die Lage, ohne weitere Hilfen (wie Kran, Gabelstapler usw.) den jeweiligen Wechsel (Stehzeug-Fahrzeug) schnell und im Einmann-Betrieb, also durch eine Person einfach und ohne besondere Gefahr durchzuführen, da die Abhebe- und Absenkvorrichtung nur um einen Hub von etwa 30 bis 40 cm, also um die Länge eines Fusses verstellt werden muss. Die Abhebe- und Absenkvorrichtung hat im Normalbetrieb die alleinige Funktion des Wechsels der Plattform von Stehzeug zum Fahrzug und umgekehrt. Es ist deshalb gegenüber den bekannten Umladeeinrichtungen wie Kräne, Stapler usw. viel kostengünstiger und ist fester Bestandteil des Fahrgestelles. Eine motorische Hebeund Senkvorrichtung greift über Lagerstellen ein und ist bevorzugt zum synchronen Abheben bzw. Absenken der Lagerstellen ausgebildet. Vier Hebe- und Senkvorrichtung sind dazu über die Containergrundfläche verteilt und weisen Lagerstellen auf, an denen steuerbare Hebelemente wie Pneumatikzylinder, Hydraulikzylinder, Luftfederkissen, Spindelmotoren oder Gewindespindeln angreifen. Für höhere Ansprüche ist es ferner möglich, dass die Verstellmotoren für eine Nivellierung des Containers je als Zweiergruppe synchron, oder einzeln verstellbar sind. Die Abhebe- und Absenkvorrichtung kann aber mit einem motorisch oder von Hand angetriebenen Scheren oder sogar über einen Stützmast mit einer Seilwinde ausgerüstet werden. Vorteilhafterweise werden die Lagerstellen in dem äusseren Viertel des Containers angeordnet und als Querträger ausgebildet, wobei die Lagerstellen je in den äusseren Endbereichen der Querträger angeordnet sind. Die Lagerstellen werden bevorzugt an den Querträgern ausgebildet, an welchen die Bodenstützen über horizontale Tragarme montierbar oder einsteckbar sind. Sehr zweckmässig ist es, wenn im mittleren Bereich der beiden Querträger je ein Zentriertrichter angeordnet ist, zum Einfangen eines an dem Fahrgestell angeordneten Zentrierbolzens, bzw. für ein Schieben und definiertes Absetzen des Containers auf dem Fahrgestell. Das Fahrgestell kann als zweiachsiger Anhänger ausgebildet werden, mit zwei Auflagerachsen, an denen Hebezeuge angeordnet sind, vorzugsweise mit je zwei Hydraulikzylindern, sowie einer in der Mitte jeder Auflagerachse angeordneten Zentriereinrichtung, wobei die beiden Auflagerachsen in den beiden äusseren Vierteln des Containers angeordnet sind. Es ist aber auch möglich den Anhänger als Ein-, Zwei oder Drei-Achser zu bauen. Ganz besonders bevorzugt werden sowohl die Plattform wie die Auflager derart symmetrisch ausgebildet, dass beide Zugrichtungen identisch nutzbar sind.

Für ein möglichst universelles Handling wird ferner vorgeschlagen, dass an der Decke des Containers vorzugsweise in zwei Querebenen, welche die Lagerstellen bzw. Lagerachsen einschliessen, Kranhaken und zwischen den Lagerstellen Anlageflächen sowie ein Abstand für Gabelstapeleingriffe angeordnet sind. Der so gestaltete Container kann auch auf die an sich bekannte Weise mit Bahn oder Grosslastern transportiert bzw. umgeladen werden kann. Zwischen dem Container und dem Fahrgestell wird eine mechanisch oder hydraulisch betätigbare, vorzugsweise als Karabinersicherung ausgebildete Festhaltevorrichtung angeordnet, welche vorzugsweise an den Zentriertrichtern angreift. Muss der Container häufig in sehr engen Platzverhältnissen hingestellt werden, so empfiehlt sich, an den Stutzen Manövrierrollen anzuordnen, derart, dass sie bei Bedarf einsetzbar bzw. absenkbar sind. Der Container kann erst mit dem Zugfahrzeug in eine bestmögliche Lage gefahren werden. Das genaue Platzieren z.Bsp. auch bis zu 90° Drehen kann danach von Hand mittels den Manövrierrollen erfolgen. Dies ist ein grosser Vorteil bei sehr engen Raumverhältnissen, wie besonders auf Baustellen oder Ausstellungen oder beim Möbelumzügeln in stättischen Verhältnissen fast immer der Fall ist. Der überraschende Vorteil liegt darin, dass ein Unternehmen z.Bsp. nicht mehr 15 leichte oder schwere Lastwagen wie bisher, sondern nur noch wenige Fahrzeuge oder Zugfahrzeuge halten muss, die in der Lage sind, einen drei bis vier Tonnen-Anhänger zu ziehen, ferner z.B. 15, 30 oder mehr preisgünstige Aufbauten. Da die Kosten für die Ladefläche mit Aufbau bzw. entsprechenden Container nur einen Bruchteil eines Kraftfahrzeuges ausmachen, können diese sehr kostengünstig am Zielort, bis zur vollständigen Entleerung hingestellt werden. Bei vielen Handwerkern ist es üblich, dass ein wesentlicher Teil des Montagehilfsmateriales sowie die benötigten Werkzeuge täglich, teils sogar zwei mal täglich von dem Firmensitz zu der Baustelle gefahren werden. Mit dem System Wechselcontainer entfallen ein Grossteil der Fahrten. Die Anzahl der erforderlichen Container, Fahrgestelle und Zugfahrzeuge richtet sich nach den besonderen Umständen. Die Erfindung erlaubt eine ganze Anzahl weiterer, vorteilhafter Einsätze. So kann der Aufbau als Baracke ausgebildet werden, welche für die Stehzeit auf vorzugsweise höhenverstellbaren Stützbeinen abgestützt und für den Wechsel an eine nächste Baustelle mittels einem Fahrgestell bzw. einem leichten Motorfahrzeug gezügelt wird. Der Aufbau ist beliebig adaptierbar und wird gemäss einer weiteren vorteilhaften Ausgestaltung als Container ausgebildet, der zwischen ungleichartigen Orten als Transportgefäss verwendet und z.Bsp. beim Produzenten für leichte landwirtschaftliche Konsumgüter, für Möbelumzüge, die Paketpost für Harasse, für Getränke- oder Marktstände oder für leichte Industriegüter wie Isolationsmaterialien gefüllt, auf ein Fahrgestell aufgesetzt und wenigstens auf einer Teilstrecke bis zum Zielort mit einem leichten Motorfahrzeug transportiert wird. Für einige Anwendungen ist es vorteilhaft wenn die Abstellhöhe des Transportaufbaues einstellbar ist. Dies gestattet auch die Ladefläche in eine optimale Lage zu stellen, und allenfalls die Höhe jeder Stütze dem Gelände anzupassen, oder eine oder mehrere Plattformen in eine horizontale Lage zu bringen. Die Erfindung ermöglicht auch, dass eine oder mehrere Plattformen direkt auf eine Ladefläche eines Transportmittels oder auf den Boden abstellbar ausgebildet ist, derart, dass z.B. für grosse Distanzen die Stückgüter z.B. mit Bahnwagen transportiert werden, wo das Umladen mittels Kranhaken oder Gabelstapler erfolgt. Weiterhin ist es möglich, dass der Aufbau als Messecontainer ausgebildet wird, derart, dass damit die für einen Messestand bzw.

Verkaufsstand benötigten Leichtteile transportiert und Plattform mit Aufbau als Messestand oder Teil eines Messestandes bzw. Verkaufsstandes eingesetzt wird.

Die neue Lösung erlaubt viele weitere Ausgestaltungen, sei es für schwere oder leichte Güter. Die nutzbare Arbeitsfläche der Einfangtrichter und der Auflagerplatten ist etwa gleich gross. Die Manövriergenauigkeit eines Fahrzeuges liegt bei etwa 20 bis 50 cm. Entsprechend wird vorgeschlagen, den Durchmesser bzw. die Seitenabmessung von Auflagerplatten und Einfangtrichter zu dimensionieren. Ein einigermassen geübter Lenker eines Fahrzeuges ist in der Lage, das Fahrzeug mit einer Abweichung von 10 bis 25 cm auf ein vorgegebenes Feld zu parkieren. Aus vielerlei Gründen werden die Bodenstützen nicht unnötig weit auseinander eingesetzt. Zum einen soll die benötigte Fläche bzw. Seitenabmessung eines Stehzeuges so klein wie möglich sein. Zum anderen wirkt sich eine zu grosse Ausladung ungünstig aus auf die kräftemässige Beanspruchung des Aufbaues. Kann nun ein Fahrer, sei es einen Anhänger oder das Fahrzeug selbst innerhalb dem genannten Spiel von 20 bis 50 cm parkieren ist auch schon das präzise Abstellen des Aufbaues auf dem Fahrgestell sichergestellt. Ein weiterer wichtiger Punkt liegt darin, dass der Einfangtrichter nicht zu hoch bauen darf und nicht in die Ladefläche hinausragen soll. Von einer gegebenen Grundfläche ausgehend wird die Höhe des Trichters um so grösser je spitzer der Winkel ist. Bevorzugt wird der Winkel von mehr als 90°. Etwa 120° stellt einen optimalen Kompromiss für den Bewegungsablauf wie auch die Bauhöhe dar. Die Auflageplatten bilden vorzugsweise zusammen mit den Unterkanten der Einfangtrichter eine gemeinsame Auflageebene. Damit kann der Aufbau z.Bsp. als leerer Container auch ohne Stützen irgendwo abgestellt oder auch übereinander gestapelt oder mit Eisenbahn oder Lastwagen transportiert werden. Die Lagerstellen werden vorteilhafterweise an zwei Hohlprofil-Querträgern ausgebildet, in welchen die Stützen einsteckbar fixiert werden können. An der Decke des Containes werden in zwei Querebenen, welche die Lagerstellen einschliessen, Kranhaken angeordnet, ferner können zwischen den Auflagerstellen Anlageflächen für Gabelstapler-Eingriffe angeordnet werden. Gemäss einer weiteren Ausgestaltung wird zwischen der Plattform und dem Fahrgestell eine mechanisch oder hydraulisch betätigbare Sicherung angeordnet, welche an den Zentriertrichtern angreifen. Die Ausnützung von besonderen Querebenen mit den Querträgern hat den grossen Vorteil, dass die wesentlichen Kräfte ohne Belastung der Aufbaukonstruktion direkt auf das Fahrgestell bzw. auf den Boden abgefangen werden. Der Aufbau kann leichter gebaut werden. Die Erfindung betrifft ferner die Verwendung der Vorrichtung wofür auf die Ansprüche 13 - 18 Bezug genommen wird.

### Kurze Beschreibung der Erfindung

In der Folge wird die Erfindung nun an Hand von einigen Ausführungsbeispielen mit weiteren Einzelheiten erläutert. Es zeigen:
- die Figur 1a: die Situation unmittelbar vor dem Absenken eines Containers;
- die Figur 1b: verschiedene Containerlagen für das Absenken auf den Boden und
- die Figur 1c: nach Abschluss der Absenkung auf den Boden;
- die Figur 2a: verschiedene Lagen einer Bodenstütze beim Absenken resp. Anheben in grösserem Massstab;
- die Figur 2b und 2c: je ein Kräftediagramm für zwei extreme Lagen;
- die Figur 3: die Verschwenkhilfsmittel des Fahrzeuges im Einsatz;
- die Figur 4: die Verwendung der Wechselstützen für eine Plattform z.B. als Zwischendeck in einen Container (Figur 8);
- die Figur 5a: eine Combination mit einer Hebebühne;
- die Figur 5b: eine Ausgangslage für das Absenken oder Anheben;
- die Figur 5c: ein abgesenkter Container mit Hebebühne in Stellung als Auffahrrampe;
- die Figur 6: eine als Abrollschiene oder Abrollbügel ausgebildete Bodenstütze;
- die Figur 7: eine Bodenstütze mit vielen Gelenken;
- die Figur 8: drei Situationen einer auf den Boden absenkbaren Plattform in einem Container oder als Laderampe;
- die Figur 9a: wie die Bodenstützen zur einseitigen Anhebung eines Containers oder Transportbehälters einsetzbar sind;
- Die Figuren 9b, 9c und 9d: verschiedene Darstellungen der Sicherung des Transport-aufbaues auf dem Fahrgestell;
- die Figuren 10a, 10b sowie 10c: drei verschiedene Positionen mit Knickfüssen;
- die Figur 11a, 11b und 11c: verschiedene Einsatzmöglichkeiten der neuen Lösung;
- die Figur 12a, 12b und 12c: drei Situationen beim Montieren eines Aufbaues auf ein Fahrgestell;
- die Figur 13a: die Wirkung von zwei Einfangstrichter/Zentrierkegelkombinationen, in Bezug auf die Längsachse;
- die Figur 13b: verschiedene Positionen eines Zentrierkegels in Bezug auf einen einzelnen Zentriertrichter;
- die Figur 14a, 14b und 14c: verschiedene Situationen beim Absenken und Montieren eines Aufbaues auf ein Fahrgestell;
- die Figur 15a: einen Grundriss einer Querträgereinheit als Auf baumodul,
- die Figut 15b: einen Schnitt Va und
- die Figur 15c: einen Schmtt Vb der Figur 15a:
- die Figur 15d: Beispiel einer Modulbauweise;
- die Figur 16: schematisch den Grundriss einer einfacheren Quertägerkonstruktion;
- die Figur 17a un 17b: schematisch die Verwendung der Knickfüsse für das Senken und Heben von schweren Lasten auf einer Plattform.

### Wege und Ausführung der Erfindung

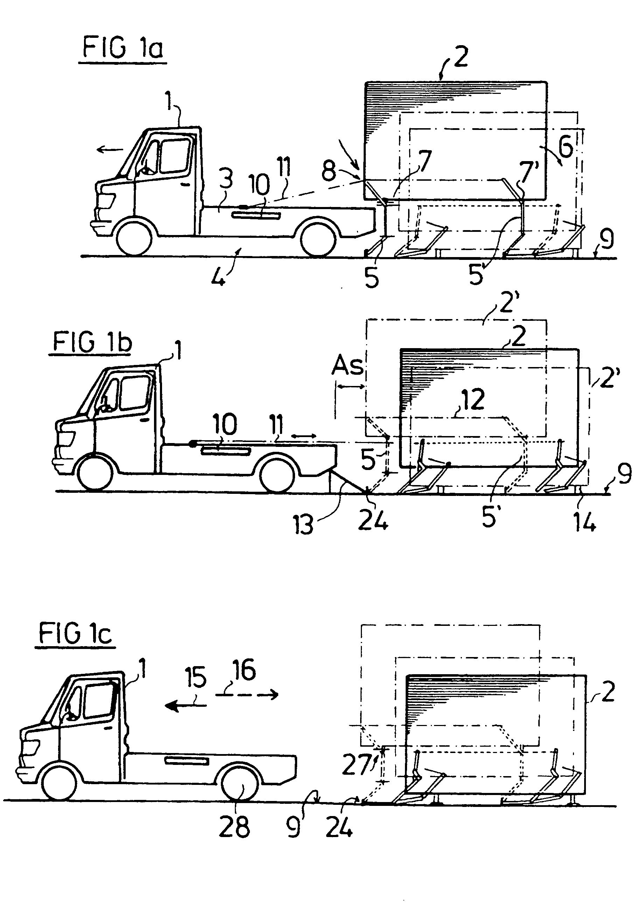

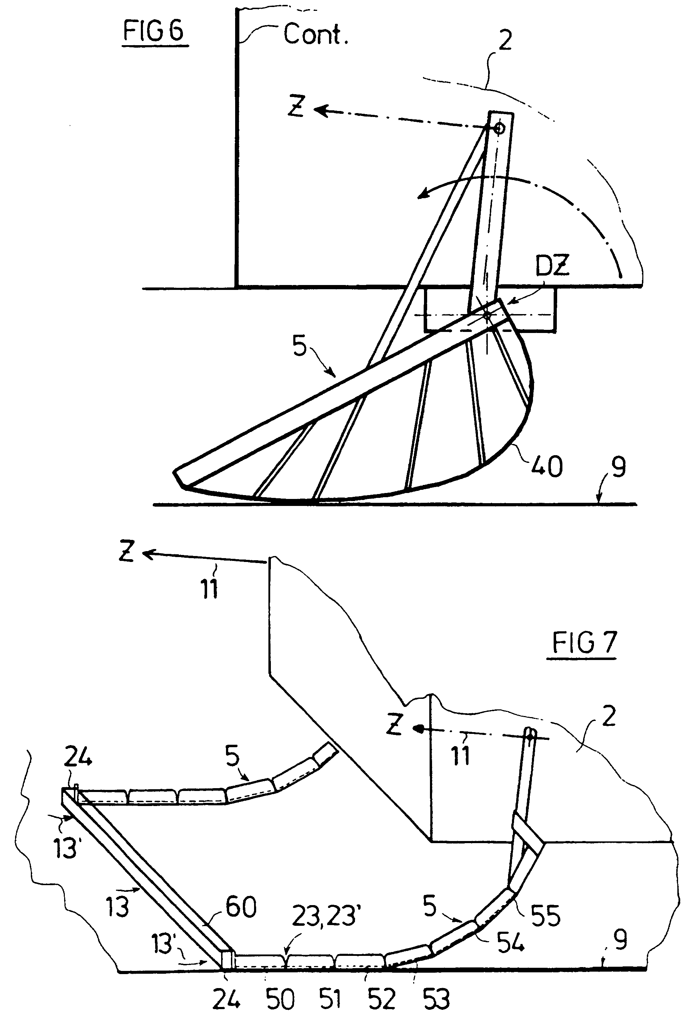

In der Folge wird nun auf die Figuren 1a bis 1c Bezug genommen, welche einen Motorfahrzeug 1 mit Fahrgestell 4 sowie einen Container 2 zeigen. Das Motorfahrzeug weist eine Wechselbühne 3 auf, wie z.B. in der WO97/13654 beschrieben ist. Es wird für die entsprechenden Ausgestaltungen sowie Variationen auf den ganzen Inhalt der WO Bezug genommen. Das gleiche gilt für den Container 2, der entsprechend irgend ein Aufbau sein kann, je nach Verwendungszweck bzw. momentanem Einsatz. Der Aufbau kann z.B. eine Ladebrücke mit oder ohne Verdeckaufbau sein. Wesentlich ist, dass bei entsprechendem Bedarf der Schnellwechsel von Fahrzeug zu Stehzeug auch möglich ist. Es ist aber auch möglich, die neue Lösung unabhängig einer Einfangtrichter/Zentrierkegelkombination zu verwenden. In den Figuren 1 bis 6 ist jeweils nur eine Seite des Containers 2 dargestellt. In Wirklichkeit ist auf der jeweils gegenüberliegenden Seite des Containers eine gleiche Bodenstützenkonfiguration vorgesehen wie in der Figur 7 angedeutet ist. Die Figur 1a zeigt eine Stellung, bei der ein Wechsel von einem Fahrzeug zu einem Stehzeug gemäss WO97/13654 schon stattgefunden hat. Der Container 2 steht auf Wechselstützen 5, 5', im ganzen auf vier Bodenstützen, und befindet sich somit in einer Hochlage. Besteht die Absicht, den Container längere Zeit in der dargestellten Hochlage zu belassen, so würde sich der Einsatz von einfachen Stützbeinen entsprechend WO97/13654 empfehlen, also einfache, gerade und senkrechte Stützbeine. Bei den in der Figur 1a gezeigten Bodenstützen hat der ganze Container 2 eine starke Tendenz gemäss Pfeil 6 auf die rechte Bildseite bzw nach hinten abzufallen, da jede Bodenstütze an einem Lagerzapfen 7, 7' verschwenkbar an den Container 2 angelenkt ist. Wenigstens eine, besser noch wenigstens zwei Wechselstützen 5 werden mit je einer Arretierung 8 gegenüber dem Container gegen ein Verschwenken blockiert. Dies gilt besonders auch für die kurze Zeitspannung von dem Übergang Stehzeug-Absenkung. Sobald der Container in die höchstmögliche Lage gemäss WO97/13654 gebracht ist, und wenn die Wechselstützen an dem Container schon montiert bzw. nach unten gelassen sind, werden diese sofort arretiert. Diese Arretierung ist wichtig, kann aber auch auf andere Weise erfolgen als in Figur 1a angedeutet ist.

In der Figur 1b ist das Motorfahrzeug 1 in eine etwas grössere Distanz As zu dem Container 2 gefahren worden. An der Wechselbühne 3 sind Verschwenkhilfsmittel 10 angeordnet, welche z.B. als Hydraulikzylinder ausgebildet sein können, von denen aus ein Zugseil 11 mit den Wechselstützen 5 verbindbar ist. Die Figur 1b zeigt den Container 2 (mit ausgezogenen Linien) in einer mittleren Absenklage, wobei ersichtlich der Container während der bogenförmigen Bewegung immer in einer Parallellage zum Boden bleibt. Strichpunktiert ist entsprechend die höchste bzw. tiefste Lage angedeutet (Container 2', 2"). Die Wechselstützen 5, 5' sind mit einem Parallelzug 12 verbunden, so dass die Verschwenkbewegung der Bodenstützen zwangsweise koordiniert wird. Um zu vermeiden, dass mit dem Zugseil entweder das Fahrzeug 1 an dem Container 2 oder umgekehrt der Container 2 an das Fahrzeug 1 heran gezogen wird, anstatt die Hebe- und Senkbewegung des Containers durchzuführen, wird zwischen Fahrzeug 1 sowie Container 2 eine Verschiebesicherung 13 angeordnet. Die Verschiebesicherung 13 kann bei leichteren Containern aus einer dünnen Stange bestehen, welche an dem Fahrzeug, bzw. der Wechselbühne einseitig derart festgehalten ist, dass er am Fahrzeug selbst bei Nichtgebrauch gesichert und für den Einsatz gegen die zwei nächstgelegenen Wechselstützen sperrbar ist. Bevorzugt werden an dem Container 2 zusätzlich kurze Füsse 14 angebracht, auf welche der Aufbau in der tiefsten Lage ruht. Die Füsse 14 können auch als Federfüsse ausgebildet sein, so dass das letzte Teilstück der Absenkung über die Einfederung abgefangen und beim Wiederanheben als Energiespeicher das Anheben erleichtert. Gemäss einem weiteren Ausgestaltungsgedanken können die Füsse 14 auch als Rollen ausgebildet werden, um, besonders im Falle von leichteren Containern, diesem eine geringe Verschiebemöglichkeit zu geben. In der Figur 1c ist mit ausgezogenen Linien der Aufbau 2 vollständig auf den Boden 9 abgelassen. Das Fahrzeug 1 ist wieder frei für andere Einsätze, wie mit Pfeil 15 angedeutet ist. Der Pfeil 16 zeigt die umgekehrte Situation. Das Fahrzeug 1 fährt zu dem Container 2 hin, um den Container 2 wieder aufzuladen.

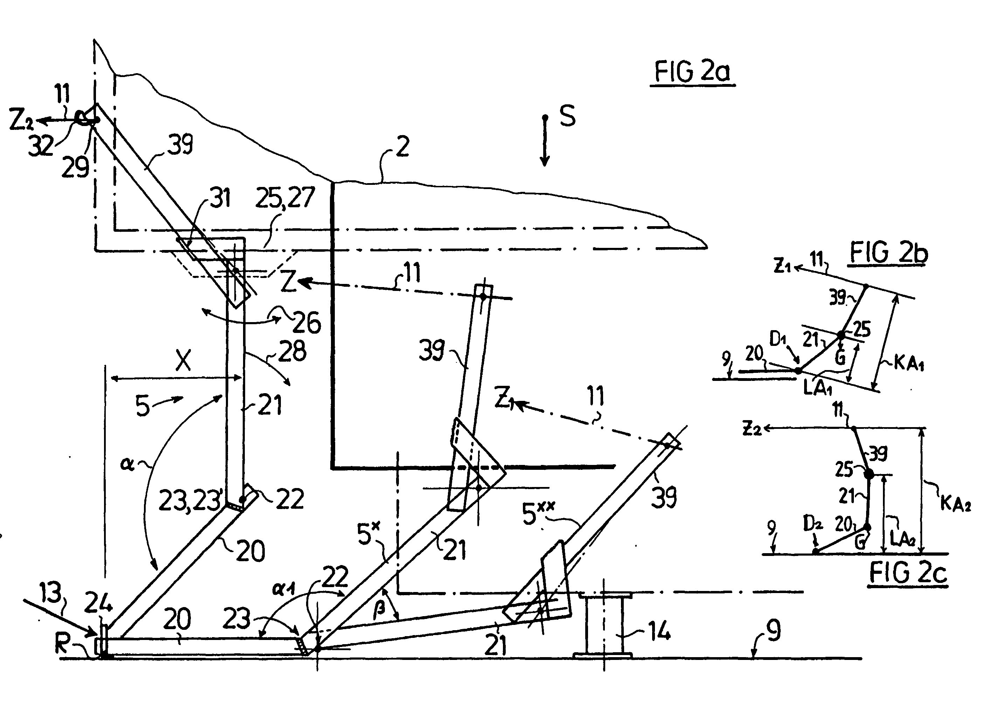

Die Figur 2a zeigt eine Wechselstütze 5 über die bogenförmige Bewegung des Containers 2 in drei verschiedenen Lagen, links im Bild in aufrechter Lage, rechts im Bild teilweise oder ganz abgesenkt, jeweils mit 5* sowie 5** bezeichnet. Die Wechselstütze besteht aus einem unteren Bein 20 sowie einem oberen Bein 21 welche über ein Gelenk 22 verbunden sind. Beide Beine 20, 21 können in eine Knielage gebracht werden. Diese ist jedoch durch Anschläge 23, 23' begrenzt. so dass ein bestimmter stumpfer Winkel α hinaus der Winkel nicht mehr verkleinert werden kann. Der Winkel α ist immer grösser als 90° unter Belastung jedoch kleiner als 180°. Das untere Bein weist einen Anschlag 24 auf, der als erstes den Boden 9 berührt. Das obere Bein 21 ist an dem Aufbau bzw. Container 2 verschwenkbar über einen Drehzapfen 25 angelenkt. Die beiden Beine können somit um den Drehzapfen 25 gemäss Pfeil 26 verschwenkt werden. Die Drehachse 27 ist des Drehzapfens 25 wie in Figur 1c gezeigt, parallel zu den Achsen 28 des Fahrzeuges 1, so dass die Fahrzeugbewegung bzw. die Bewegung des Zugseiles sowie der Bodenstützen in der selben Ebene erfolgen. Der Drehzapfen 25 ist in jeder Lage um ein Mass X gegenüber dem Stützpunkt 24 in Richtung des Containerschwerpunktes S versetzt. Dies hat zur Folge, dass der Container 2 in der Hochlage auf den Bodenstützen 5 gemäss Pfeil 28 abfallen will. Die Bodenstützen 5 müssen deshalb an einer unkontrollierten Verschwenkbewegung gehindert werden. Das geschieht einerseits durch ein Fixieren eines Zugarmes 39 mit einer Fixation 29 an dem Container 2. Der Zugarm 39 ist im Uhrzeigersinn um den Drehzapfen 25 drehbar, jedoch nur bis zu der dargestellten Lage, welche über einen Anschlag 31 begrenzt ist. Am Zugarm 39 befindet sich ein Seilhaken 32 an dem das Zugseil 11 befestigbar ist. Die Absenkbewegung erfolgt nun dadurch, dass die Wechselstütze 5 sich um den Stützpunkt 24 im Uhrzeigersinn bewegt. Dabei bleibt der Winkel α in der ersten Absenkphase unverändert. Die Kräfte werden durch das Zugseil 11 einerseits sowie den Stützpunkt 24 der Wechselstütze abgefangen. Bevorzugt wird der Stützpunkt 24 wie mit dem Radius R angedeutet ist, abgerundet. Mit 5* ist die Situation dargestellt, bei der die erste Absenkphase abgeschlossen ist. Das untere Bein 21 liegt vollständig auf dem Boden 9 auf. Die weitere Absenkung erfolgt nun durch eine Drehbewegung des oberen Beines 21 um das Gelenk 22. Die Absenkbewegung kann so lange fortgesetzt werden, bis auch das obere Bein 21 vollständig auf dem Boden 9 aufliegt, oder aber wie im Beispiel gezeigt ist, bis der Container auf den Füssen 14 abgestützt ist. Solange Ist der Container 2 auf den Füssen 14 aufliegt, werden die Wechselstützen nicht gebraucht. Die Wechselstützen können so ausgebildet sein, dass sie wegnehmbar und zusammenlegbar in das Fahrzeug oder in den Container versorgt werden können. Die gezeigte Bein-Konfiguration hat den Vorteil, dass in jeder Lage die Absenk- oder Abhebbewegung hebelübersetzt mit relativ kleinen Zugkräften erfolgen kann.

Die Figuren 2b und 2c zeigen entsprechend der Figur 2a zwei Dispositionen während der Absenk- bzw. Abhebebewegung mit den wirksamen Hebellängen. In der Figur 2b ist eine tiefe Lage dargestellt, welche gleichzeitig sehr ungünstig ist in Bezug auf eine erforderliche Hebelkraft. In der Figur 2b wird das ganze Gewicht um den Drehpunkt D1 bewegt. Es ergibt sich ein längerer Kraftarm KA1 im Verhältnis zu dem Lastarm LA1, wobei das Gewicht des Transportgutes mit G angedeutet ist. Die erforderliche Zugkraft Z₁ ist durch das wirksame Hebelgesetz relativ klein. In der Figur 2c hat bereit ein Wechsel stattgefunden, insofern die Bewegung nunmehr um den Drehpunkt D2 erfolgt. Das Transportgut ist bereits angehoben. Es ergibt sich in der gezeigten Lage ein ungünstigeres Längenverhältnis von KA2 zu LA2. Dies ist jedoch nicht nachteilig, da die erforderliche Bewegungskraft Z2 nur noch ein Bruchteil ist, gegenüber der Lage gemäss 2b, welche das Maximum der erforderlichen Hebekraft darstellt.

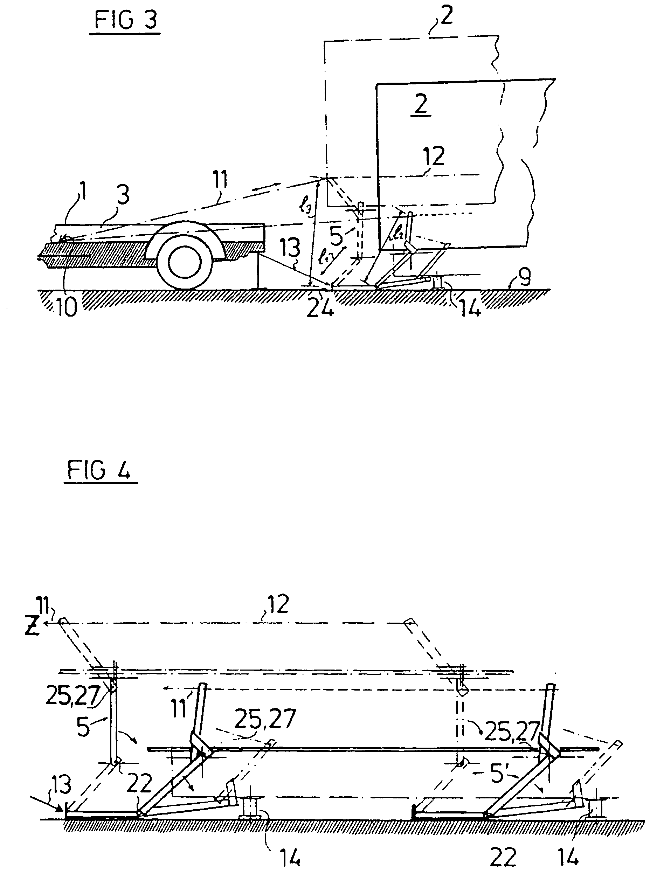

Als Hebellängen sind die Längen *L*1, *L*2 sowie *L*3 entsprechend den Hebelgesetzen in Beziehung, wie in der Figur 3 angedeutet ist. Die Figur 4 zeigt sinngemäss die koordinierte Bewegung der Wechselstützen 5 und 5' für ein Zwischendeck in einem Container.

Für viele Güter ist es von Vorteil, wenn nicht nur eine Plattform, sondern zwei oder mehrere bestehen, welche durch eine Absenkung der oberen eine gleichartige Nutzung und Bedienung beider erlauben, wie dies bei Autotransporten schon verbreitet bekannt ist.

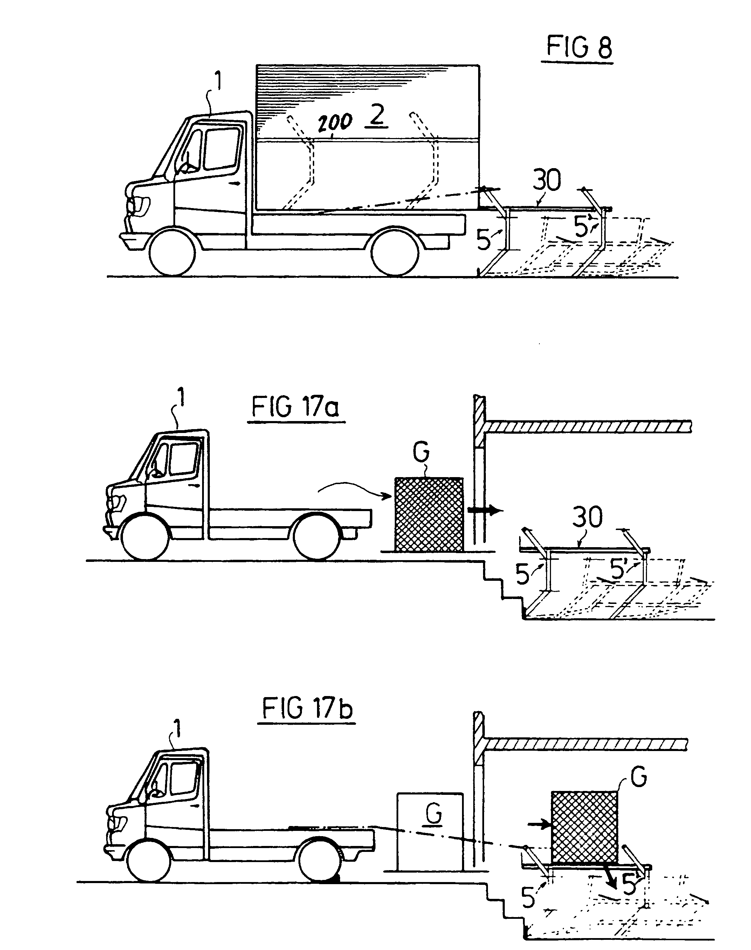

Die Figuren 4 sowie 8 zeigen entsprechend mit einer Plattform 20x die entsprechende einsatzmöglichkeit.

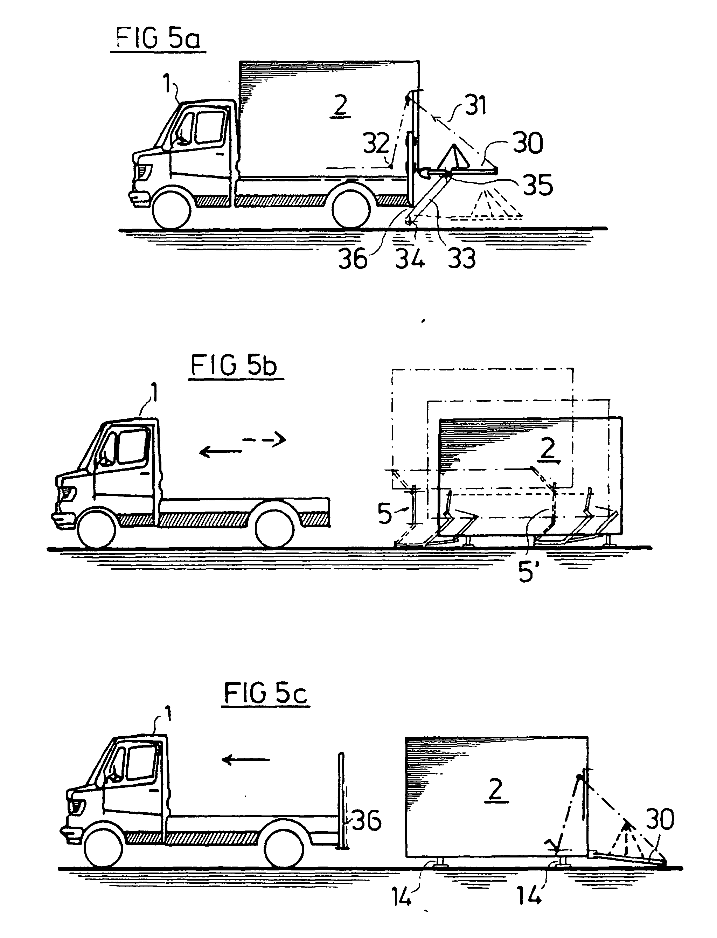

Die Figuren 5a, 5b und 5c zeigen eine weitere Ausgestaltungsmöglichkeit. Der Transport eines ganzen Containers ist eine Funktion. In vielen Fällen auch Güter z.B. auf Paletten transportiert werden, wobei jedes Palett ein Gewicht von z.B. 100 bis 300 kg haben kann, also Gewichte, die durch eine Person ohne Hilfsmittel nicht bewältigbar sind. Das vorgesehene Containerkonzept sieht grundsätzlich das Aufladen und Abladen des Containers von einem Ausgangsort zu einem Zielort vor. Das Zwischenabladen von einzelnen Ladegütern ist zwar möglich, aber doch verhältnismässig aufwendig, da bei schweren Stücken jedesmal der ganze Container auf den Boden abgelassen werden muss, wenn nicht Hilfsmittel zur Verfügung stehen. Bei einer sehr vorteilhaften Ausgestaltung wird am Container, sei es seitlich oder hinten eine absenkbare Plattform 30 angeordnet, welche über ein Zugseil 31 absenkbar ist. Das Zugseil 31 kann über eine Handkurbel 32 oder direkt über das Zugseil 11 betätigt werden. Die Plattform 30 kann über einen Dreharm 33 der einerseits an einem Gelenk 34 einer Stütze 36 und anderseits an ein Gelenk 35 an der Plattform 30 befestigt ist. Von der horizontalen Lage (dicke Striche) bewegt sich die Plattform gehalten über die Drehpunkte 34 und 35 sowie das Zugseil 31 nach unten, resp. umgekehrt beim Anheben. Die Figur 5b zeigt den erfindungsgemässen Wechsel des ganzen Containers, Figur 5c die weitere Möglichkeit, bei der die Plattform 30 als Fahrrampe ausnützbar ist.

Die Figur 6 zeigt die Ausgestaltung einer Bodenstütze 5 als Abrollschiene oder Abrollbügel 40.
Die Figur 7 zeigt eine weitere Ausgestaltung der Bodenstütze 5 mit vielen Gelenkstellen 50 bis 55. Schematisch ist ein Querbalken 60 dargestellt an den eine oder zwei Verschiebesicherungen 13 angreifen können (Figur 3). Bevorzugt greift jedoch die Verschiebesicherung je an den Anschlägen 24 an. Die Figur 8 zeigt den Einsatz von Bodenstützen für das Absenken einer Plattform, anstelle der Ausgestaltung gemäss Figur 5a.

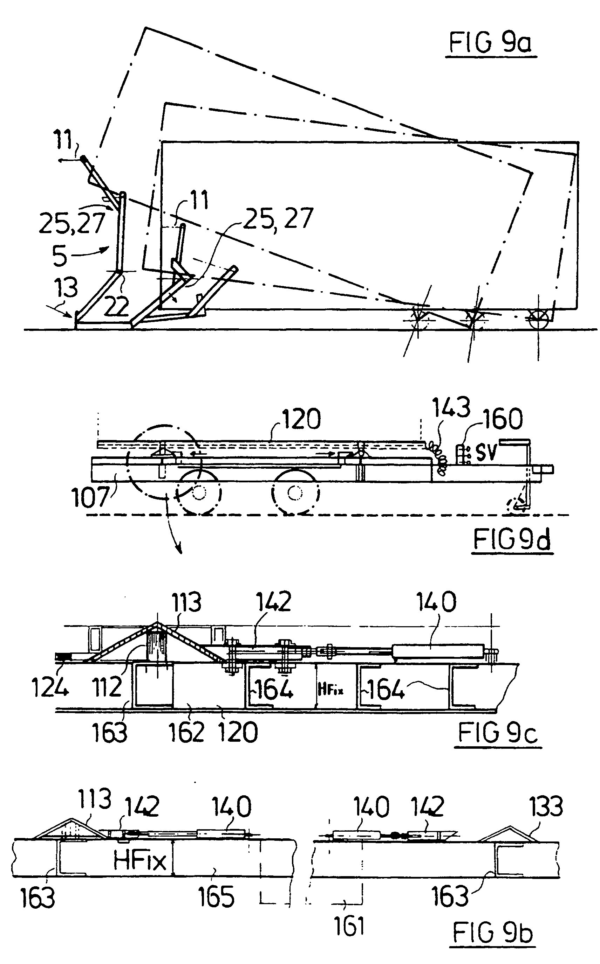

In der Figur 9a ist eine weitere Möglichkeit dargestellt. Weit verbreitet sind Grosscontainer für Schwergüter, die schlittenartig auf einen Lastwagen mit Hakenzug aufgezogen werden. Hier ist es nun möglich, mit nur zwei Bodenstützen den Container einseitg vom Boden anzuheben und danach auf den Lastwagen zu ziehen. Die Bodenstützen können hinten oder vorne angebracht werden und das Anheben mittels Hakenzug des Lastwagens erfolgen.

Die Figuren 9b, 9c und 9d zeigen die Situation einer Wechselbühne mit einer Plattform 120 die auf einem Fahrgestell montiert ist, darunter vergrössert ein Sicherungssystem. Über einen doppelwirkenden Zylinder 140 wird beidseits je eine Karabinersicherung betätigt. Ein entsprechender Klemmenkeil 142 greift in die Schräge des jeweiligen Zentriertrichters 113 ein und sichert die Verbindung von der Plattform 120 und dem Fahrgestell 107. Es ist ferner auch möglich als Zusatzsicherung z.Bsp. noch eine Kettensicherung 143 anzubringen. Die Klemmteilsicherung hat den grossen Vorteil, dass über die Hydraulik enorme Kräfte aufgebracht und in vielen Fällen der Container millimetergenau in die zentrierte Position schiebbar ist. Dies erlaubt eine weitere Sicherung in der Form von Bolzen oder Keilen von Hand in der Periperie der Wechselbühne anzubringen. Die Figur 9b zeigt wie beidseits, nach vorne und nach hinten, die Verriegelung eingreift. Die Figur 9c ist eine Vergrösserung einer Verriegelungsseite. Wichtig ist das Zusammenwirken aller kontaktierenden Elemente: der vielen Auflagepunkte durch dämpfende Zwischenlagen 124, insbesondere aber die doppelte Keilwirkung des Zentrierkegels 112 im Inneren des Einfangtrichters 113 und des Klemmkeiles 142 am äusseren des Einfangtrichters. Die Steuerungs- und Verriegelungsfunktionen SV werden von einem Steuerkasten 160 betätigt, welche bevorzugt mit der Elektrik des Fahrzeuges verbunden ist. Im gezeigten Beispiel weist die Abhebe- und Absenkvorrichtung hydraulische Zylinder auf, welche von einer zentralen Hydrauliktruppe 161 mit dem Druckmedium versorgt werden. Alle Ventile sowie die Ein- und Ausschaltung erfolgt über den Steuerkasten 160. Ferner ist es möglich im Fahrzeug Verriegelungsfunktionen vorzusehen, so dass z.Bsp. das Fahrzeug nicht wegfahren kann, wenn Grundfunktionen nicht vorschriftsgemäss durchgeführt und abgeschlossen sind. Die beweglichen Elemente des Sicherungssystems sind mit dem Fahrgestell bzw. der Wechselbühne verbunden, bleiben also Teil des Fahrzeuges. Es ist damit möglich sehr viele gleiche preisgünstige Wechselcontainer mit nur einem vollständigen Fahrzeug mit den bewegten Teilen, den motorischen Mitteln sowie der Steuerung zu bedienen.

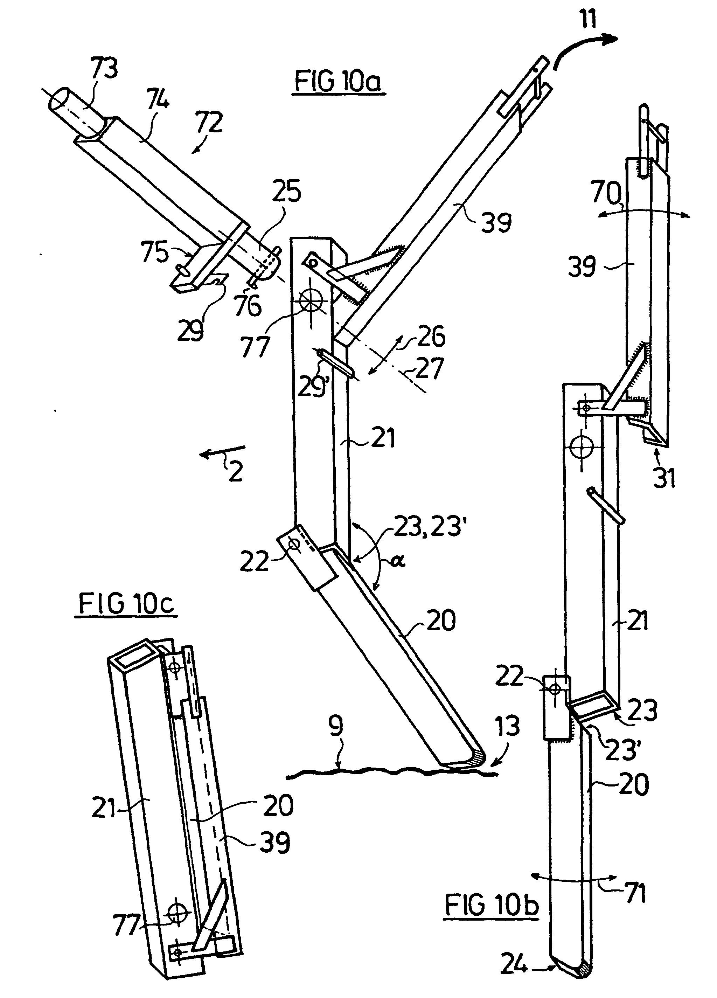

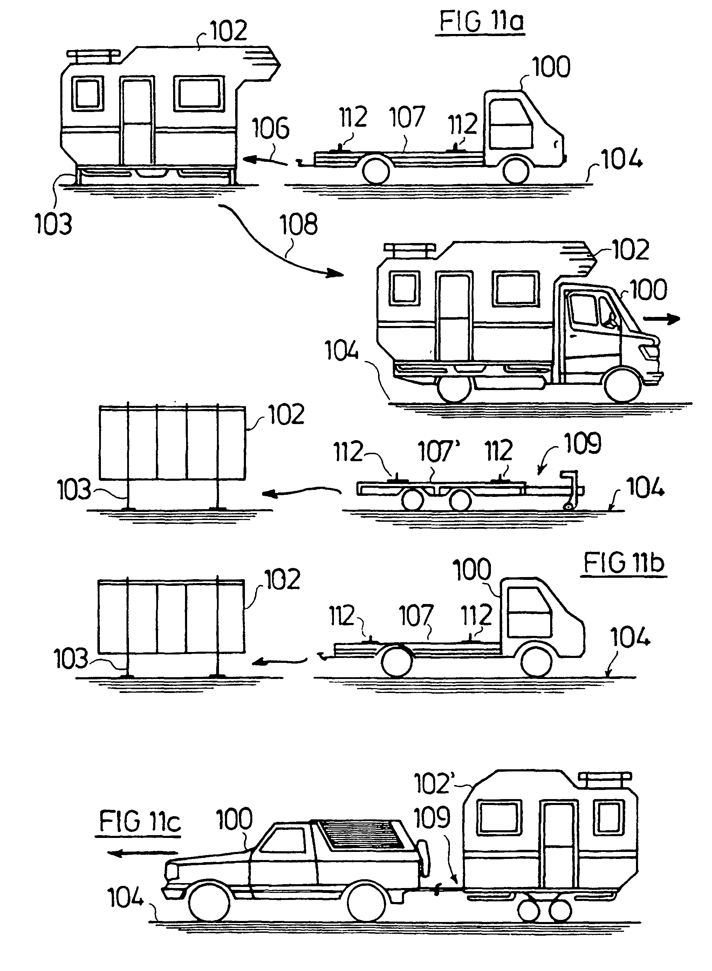

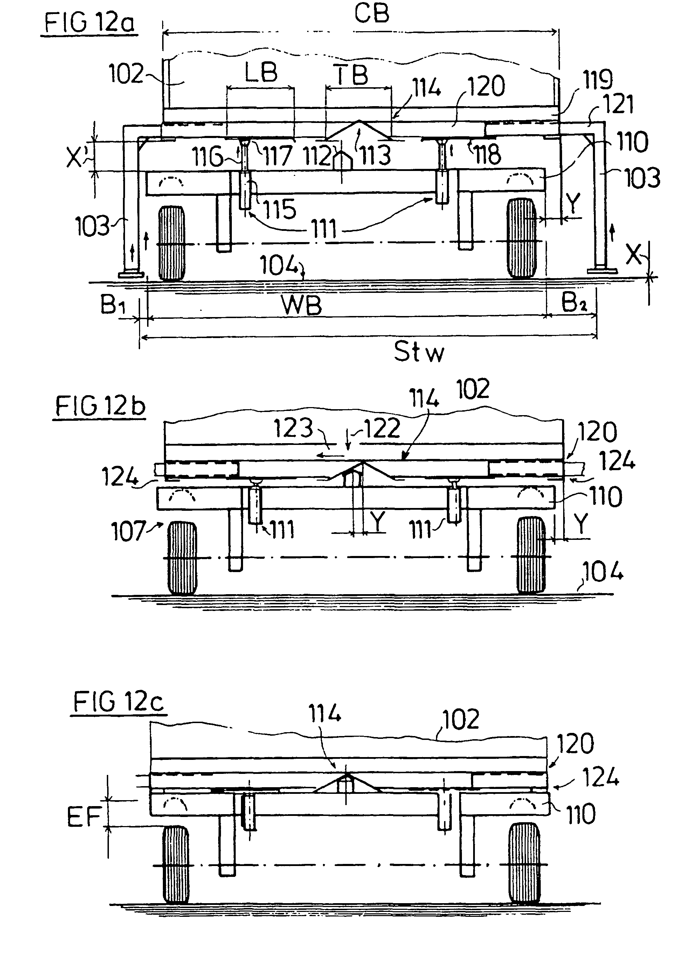

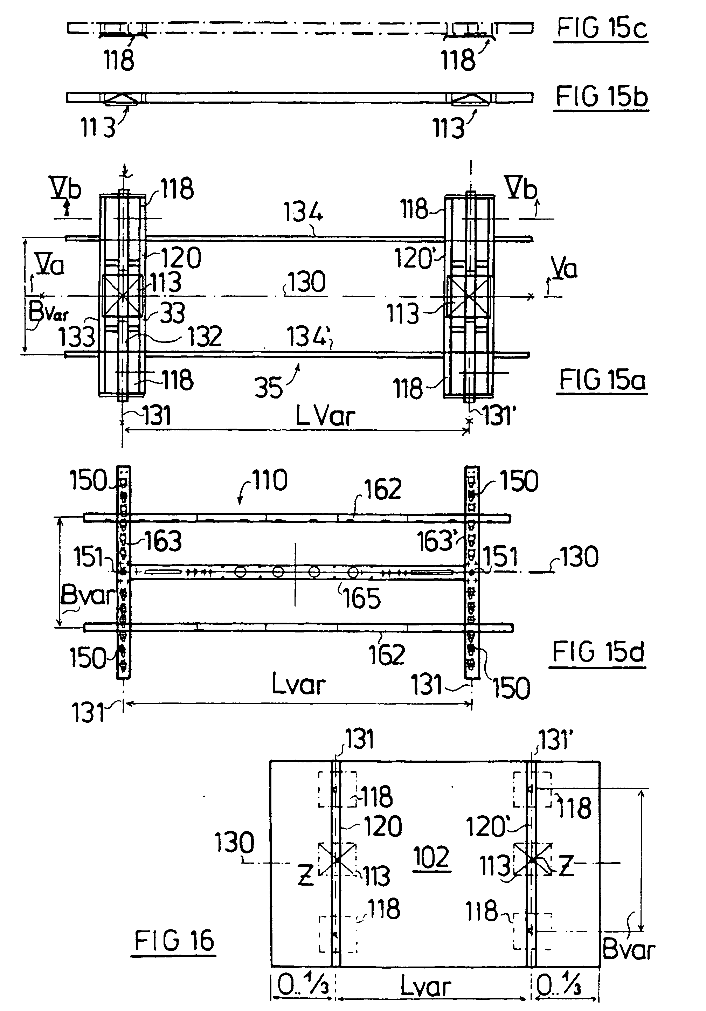

In den Figuren 10a bis 10c ist eine Wechselstütze als Knickfuss oder Kipphebelstütze in verschiedenen Stellungen dargestellt. Die Figur 10a ist von der Seite des Transportaufbaus also von der Innenseite gesehen. Die Figur 10a ist die Betriebs- oder Gebrauchslage. Demgegenüber zeigt die Figur 10c die Bodenstütze als Paket zusammengelegt, damit die Knickfüsse bei Nichtgebrach am kleinstmöglichen Ort z.B. unter dem Transportaufbau oder am Fahrzeug versorgt werden können. Ist die Wechselstütze für leichtere Aufbauten mit einer Zuladung von nur einigen Tonnen bestimmt, dann können die drei Grundelemente in Leichtmetall hergestellt werden, so dass das Hantieren erleichtert wird. Je nach Situation können die Wechselstützen z.B. in zusammengelegtem Zustand auch direkt an dem Transportaufbau in gesicherter Position festgemacht werden. In der Figur 10b ist die Wechselstütze 5 in gestreckter Position, welche entweder die Ausgangslage für das Montieren an dem Transportaufbau sein kann, oder aber umgekehrt, für die Demontage. Je nachdem werden der Zugarm 39 und das untere Bein 20 im Uhrzeigersinn oder im Gegenuhrzeigersinn verschwenkt wie mit Pfeilen 70 und 71 angedeutet ist. In der Figur 10a ist oben zusätzlich eine Gelenkachse 72 dargestellt, die am Transportaufbau selbst montiert wird z.B. in einem Hohlprofile 132 (Figur 15). Auch die Gelenkachse kann entsprechend den Stützbeinen 103 (gemäss Figuren 12) am Transportaufbau schnell montiert oder demontiert, oder aber bei Bedarf in montiertem Zustand an dem Transportaufbau in gesicherter Stellung verbleiben. Es ist durchaus möglich, senkrechte Bodenstützen 103 oder Knickfüsse wahlweise entsprechend der besondere Situation zu verwenden. Die Bodenstütze 103 (Figur 11a) sind eher für eine längere Dauer im Falle eines Stehzeuges gedacht, die Kipphebelstützen dagegen für den Wechsel von einer Hochlage in eine Tieflage und wenn die Hochlage nur kurzzeitig dauert. Die Gelenkachse 72 weist eine Verlängerung 73 als Dreherteichterung im montierten Zustand, und einen kräftigen Aufnahmeschaft 74 auf, zum Einstecken in die entsprechende Führung des Transportaufbaues. Eine bestimmte Position in der Hochlage kann über einen Riegel 29 (als Fixation) und gegebenenfalls mit einer zusätzlichen Feder gesichert werden. Damit kann der Transportaufbau in einer Hochlage für eine gewisse Zeit verbleiben. Das obere Bein 21 wird ferner im montierten Zustand nach innen durch einen Distanzhalter 75 und nach aussen durch einen Splinten bzw. Sicherungsbolzen 76 auf dem Drehzapfen 25 gegen eine Schiebebewegung gehalten. Im oberen Bein 21 ist eine Bohrung 77 angebracht, in der mit genügendem Spiel der Drehzapfen 25 gelagert ist. Auch die Bodenstützen sind auf diese Weise mit dem Konzept des modularen Aufbaue konzipiert. Der Einsatz der einzelnen Module lässt sich nach dem konkreten Bedürfni festlegen. Der Riegel 29 wirkt als Verdrehsicherung zusammen mit einen Sicherungsbolzen 29'. Damit kann der Transportaufbau in einer Hochlage gesicher werden, zumindest während der Zeitdauer eines Umlades bzw. Positionswechse (Stehzeug-Fahrzeug).

In der Folge wird nun auf die Figuren 11a, 11b und 11c Bezug genommen. Dabei is in der Figur 11a als Aufbau ein Wohnmobil und in der Figur 11b ein einfache Container dargestellt. Die Figur 11c zeigt einen Wohnwagen als Anhänger, der am Or als Standzug auf Wechselstützen gesetzt werden kann. Ein Leichtfahrzeug 100 das als Zweiachser dargestellt ist, kann z.B. ein Fahrzeugtype sein, bekannt unter dem Namen Mercedes Sprinter, VWLT35, Ford Transit, IVECO usw. Links daneben ist ein Aufbau dargestellt als Wechselcontainer 102, der über Stützen 103 auf dem Boden 104 abgestützt ist. Mit einem Pfeil 106 ist angedeutet, dass das Fahrzeug 101 im Begriffe ist, mit seinem hinteren Teil seines Fahrgestelles 107 unter den Wechselcontainer 102 zu fahren. Der Wechselcontainer 102 wird danach auf das Fahrgestell montiert, wie in der Folge im Detail noch dargestellt wird. Mit Pfeil 108 ist die fertig montierte Einheit als abfahrbereites Fahrzeug symbolisiert. Die Figuren 11b und 11c zeigen zwei weitere Einsatzmöglichkeiten, nämlich den Transport mit dem Fahrzeug selbst oder mit einem Anhänger, und die Figur 11b der Transport mit beiden Der Transport mit einem Anhänger 109 hat insofern einen grossen Vorteil, als dieser mit einem Personenwagen oder einem Jeep gezogen werden kann, im Rahmen der zulässigen Ladegewichte.

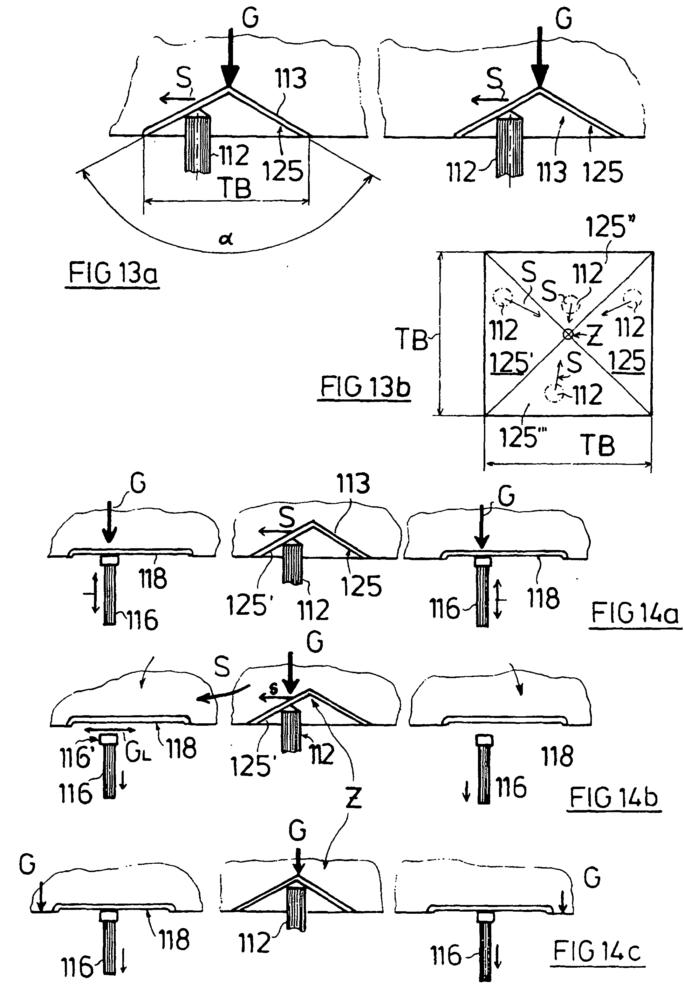

In den Figuren 12a, 12b und 12c sind drei verschiedene Positionen von dem Beginn der Absenkbewegung des Aufbaues 102 bis zum Absetzen auf dem Fahrgestel dargestellt. Dabei ist die Figur 12a gleichzeitig das Ende der Abhebebewegung des Containers von der Abstützung auf den Boden über die Sützten 103. Das Fahrgestell weist oben eine Wechsellbühne 110 auf, welche ein Zwischenglied ist zwischen dem eigentlichen Fahrgestell sowie den Elemente über welche der Wechsel durchgeführt wird. Diese Elemente bestehen aus einer Abhebe- und Absenkvorrichtung 111 sowie einem Zentrierkegel 112. Der Zentrierkegel 112 bildet zusammen mit einem Einfangtrichter 113 eine Einfangtrichter/Zentrierkegelkornbination 114. Die Abhebe und Absenkvorrichtung 111 besteht aus mehreren, vorzugsweise vie Hydraulikzylindern 115, welche über eine Kolbenstange 116 sowie einen Kolbenstangenkopf 117, je über eine Auflagerplatte 118 den Aufbau 102 stützen Der Aufbau weist eine Plattform 119 auf, an deren Unterseite ein Querträger 120 befestigt ist, an denen sowohl der Einfangtrichter 113 wie auch die zwe Schiebeplatten/Auflagerplatten 118 fest verbunden sind. Der Querträger 120 kann als Hohlprofil ausgebildet sein, in welchem an den beiden äusseren Enden ein horizontale Träger 121 montier- bzw. eingeschiebbar ist, der Teil der vertikalen Stützen 103 ist Die Stützen 103 sind in der Figur 12a um ein kleines Mass X vom Boden abgehoben das kleiner ist, als das Mass X' zwischen der Wechselbühne 110 sowie der Auflagerplatte 118 des Aufbaues. Die Differenz entspricht der Einfederung der Wechselbühne 110 auf dem Fahrgestell 107. In der Position gemäss Figur 12b können die Stützen 103 weggenommen und z.Bsp. um 90° in eine Horizontale oder um 180° in eine Vertikale verschwenkt werden. Der Aufbau 102 bzw. der ganze Container 102 ruht nun vollständig auf der Abhebe- und Absenkvorrichtung 111. Die Absenkbewegung kann beginnen. Die Kolbenstangen 116 werden zügig eingezogen und entsprechend der ganze Aufbau 102 abgesenk, bis die Spitze des Zentrierkegels 112 in Kontakt kommt mit dem Einfangtrichter 113 (Figur 12c). Der Zentrierkegel 112 ist in seiner einfachsten Ausgestaltung ein massiver runder Eisenkörper mit kegeliger Spitze und starr mit dem Fahrgestell bzw. der Wechselbühne verbunden. Der Zentrierkegel 112 kann aber auch mechanisch beweglich z.Bsp. als bewegbarer Kolben ausgebildet sein, und weitere Funktionen übernehmen. Die Hauptfunktionen der Zentrierkegel 112 sind eine Abweisung des Einfangtrichters 113, eine Zentrierung des Einfangtrichters und letztlich eine Sicherung des Aufbaues in der zentrierten Lage. Der Pfeil 122 in Figur 12b deutet die senkrechte Bewegung des Aufbaues von oben nach unten an. Der Pfeil 123 zeigt die horizontale Schiebebewegung an, die durch die Abweisbewegung zwischen Zentrierkegel 113 und der entsprechenden Schrägfläche 125' des Einfangtrichters entsteht (Figur 14). Trotz anfänglichen Bedenken haben alle bisherigen Praxiseinsätze gezeigt, dass der entscheidende Bewegungsablauf aus der Stellung gemäss Figur 12b in die Stellung gemäss Figur 12c dann am besten abläuft, wenn der Vorgang zügig durchgeführt wird. Der Vorgang ist nicht ruckartig, wenn im Bewegungsablauf kein künstlicher Stillstand erzeugt wird. Das Fahrgestell unterstützt durch seine Einfederung und der Container durch seine Beweglichkeit mit vielen Freiheitsgraden den Bewegungsablauf, so dass der Container gleichsam in die präzise Auflageposition 'taumelt' bzw. rutscht. Es kann vorteilhaft sein, die Auflagerplatten 18 oder den Kolbenstangenkopf 117 mit einem gleitfördernden Material zu versehen. Bevorzugt werden zwischen der Wechselbühne 110 sowie der Plattform 119 dämpfende Zwischenlagen 124 vorgesehen, damit der Aufbau für die Fahrt allseits auf den dämpfenden Zwischenlagen über viele Stellen gut auf dem Fahrgestell resp auf der Wechselbühne ruht.

Den Figuren 13a und 13b sowie 14a bis 14c ist ein weiterer wichtiger Aspekt der neuen Erfindung entnehmbar, nämlich die Grösse der Schiebeplatte sowie des Einfangtrichters. Es wird angenommen, dass die grösste Breite des Fahrgestelles WB sowie die grösste Breite CB des Containers etwa gleich ist. Die lichte Weite zwischen den Stützen Stw ist demgegenüber um ein Mass B1 und B2 grösser (Figur 12a). B1 + B2 ist das Spiel, dass der Fahrer hat, um das Fahrgestell unter dem Aufbau 12 zu parkieren. Die Breite LB der Lagerplatten 118 und die Breite TB des Einfangtrichters sind etwa gleich und je etwa gleich gross wie B1 und B2 zusammen. In der Praxis liegt dieses Mass zwischen 120 und 50 cm. Dies hat den ganz besonderen Vorteil, dass jede Parkierungsposition innerhalb der lichten Weite Stw zwischen den Stützen zu dem gleichen Ergebnis, dem präzisen Absetzen auf dem Fahrgestell führt. Das gleiche Problem tritt in Querrichtung des Fahrzeuges, wie auch in Fahrzeuglängsrichtung auf, wie in der Figur 3 dargestellt ist. In der Figur 13b ist angedeutet, dass der Trichter vier Gleitflächen 125, 125', 125", 125' " aufweist. Jede der schrägen Gleitflächen 125 bewirkt, dass der Zentrierkegel in die Zentrumslage Z kommt (Figur 14c). Der Winkel a wird bevorzugt grösser als 90° optimal in dem Bereich von etwa 120° gewählt. Mit G ist das Gewicht des Containers angedeutet. Je mehr das Gewicht während dem Absenken von dem Aufbau bzw. dem Container von den Auflagern auf die Einfangtrichter verlagert wird, umso stärker ist die seitliche Schiebewirkung S auf den Container. Durch die Schiebewirkung S gleitet die Schiebeplatte/Auflagerplatte 118 über den Kolbenstangenköpfen 117. Das Schieben kommt also durch die kombinierte Wirkung von dem Einfangtrichter sowie der flachen, ebenen Schiebeplatte zustande. Würde, nur als theoretische Betrachtung, der ganzen Aufbau kurzzeitig nur auf den Spitzen der zwei Zentrierkegeln abgestützt und alle Kolbenstangen sich frei nach unten bewegen, so entstände ein vollkommen labile Lage für den Container. Der Container würde sich zwangsnotwendig auf die eine oder andere Seite neigen und so wieder die seitliche Schiebebewegung auslösen. Es entstände eine leichte Erschütterung was wiederum für die Schiebebewegung förderlich wäre. Die Einfangstrichter können auch eine andere als eine einfache Pyramidenform haben, z.Bsp. gerundete Einführflächen. Der Einfangtrichter hat die eigentliche Funktion des Einfanges des Aufbaues auf die zentrierte, sichere Lage für die Fahrt auf der Strasse. An der Gleitplatte oder an der Aufliegestelle der Kolbenstange 1 b bzw. am Kolbenkopf 116' kann ein Gleitstoff G_{L} angebracht werden.

Die Figuren 15a, 15b, 15c und 15d sowie 16 zeigen ein Containermodul einer Querträgergruppe und die systematische Anordnung der besprochenen Elemente zueinander. Die optimale Disposition liegt darin, dass die beiden Einfangtrichter 113 in der Längssymmetrieebene 130 des Containers angeordnet werden. Dies ergibt für die Taumel- und Schiebekräfte ein Optimum, resp. ähnliche oder gleiche Bedingungen in allen vier Richtungen (seitlich und längs). In Bezug auf die Kräfteübertragung bzw. Einwirkung auf den Container in Leichtbauweise empfiehlt sich die Anordnung sowohl der zwei Auflagerplatten 118 wie die Einfangtrichters 113 je hinten und vorne in einer gemeinsamen Querebene 131 resp. 131'. Ein Entsprechendes gilt für die Komplementärteile, Zentrierkegel und Abhebe- und Absenkvorrichtung bzw. deren vier Hydraulikzylinder (Figur 5c). Besonders für grössere Abmessungen ist es zweckmässig, die Querträger 120 aus einem mittleren Hohlprofil 132 sowie zwei seitlichen Profilen 133 zusammenzusetzen. Beide Querträger 120 und 120' werden mit zwei Längsverbindungen 134, 134' verbunden und bilden eine Querträgerbaugruppe oder Aufbaumodul 135 die mit einer Wechselplattform bzw. dem Boden, gegebenenfalls Holzboden, eines Containers verschraubt werden kann. Für eine gute Kräfteverteilung empfiehlt sich die beiden Querachsen 120, 120' innerhalb des äusseren Drittels oder des äusseren Viertels des Containers anzuordnen. Die Ausdrücke vorne und hinten beziehen sich auf die Fahrrichtung, haben oben dann keine Bedeutung, wenn der ganze Aufbau symmetrisch konzipiert ist. Die Querträger können als Standardgruppe und die Längsverbindungen 134 jeweils an jeder Fahrzeugtype bzw. Fahrzeuggrösse angepasst werden. Optimal ist jedoch für beide Richtungen ein Standardmass. Unabhängig der konstruktiven Ausgestaltung der Querträger bilden diese bevorzgut je eine Querachse 131 resp. 131' resp. Querebenen 131, 131'. Die Figur 15d zeigt ein einzelnes Wechselbühnenmodul. Fiktiv eingezeichnet ist der Ort der Lagerstellen 150 sowie der Zentrierstellen 151. Die Zentrierstellen 151 befinden sich in der Längssymmetrieebene 130. Vorne und hinten befinden sich in je einer Querachse 131' bzw. 131 je zwei Lagerstellen 150 und jeweils in der Mitte eine Zentrierstelle 151. Die motorische Hebe- und Senkvorrichtung greift über Lagerstellen ein und ist zum synchronen Abheben bzw. Absenken der Lagerstellen ausgebildet. Bevorzugt weist sie vier über die Containergrundfläche verteilte Lagerstellen auf, an denen motorische Antriebsmittel wie Pneumatikzylinder, Hydraulikzylinder, Luftfeder- kissen, Spindelmotoren oder Gewindespindeln bevorzugt synchron steuerbar angreifen. Für höhrere Ansprüche ist es möglich, dass die Verstellmotoren für eine Nivellierung des Containers je als Zweiergruppe synchron oder einzeln verstellbar sind. Die Abhebe- und Absenkvorrichtung kann aber mit einem motonsch oder von Hand anbetriebenen Scheren ausgerustet werden. Die wesentlichen Grundelemente des Wechselbuhnenmoduls sind zwei Längstraversen 162, 162', einen Mittelträger 165 sowie zwei starke Quertraversen 163, 163' welche als Steckprofile mit Ausnehmung 164 ausgebildet sind. Dies erlaubt den Zusammenbau mit verschiedenen Längen- und Breitenabmessungen. Die Längstraversen können passend auf die Längsträger des Fahrzeuges eingestellt und starr verbunden werden. Die Länge L var sowie die Breite B var kann so auf jede Fahrzeugtype angepasst werden.

Die Figur 16 zeigt eine einfache Ausgestaltung einer Querträgerkonstruktion.

Die Figuren 17a und 17b zeigen eine interessante Verwendungsmöglichkeit der erfindungsgemässen Knickfüsse, zum Aufladen und/oder Abladen insbesondere z.B. für das Absenken und Heben schwerer Lasten z.B. auf ein Plateau, einer Laderampe, einem Transportrahmen oder einem Palett bzw. eine Ladefläche oder gegebenenfalls über entsprechende Traversen an der Last selbst. Nicht selten muss eine schwere Last von einem Transportmittel abgeladen und dann innerhalb eines Gebäudes, durch Toröffnungen hindurch, auf ein um einige Treppenstufen tieferes Niveau verschoben werden. Das horizontale Schieben geht meistens ohne Probleme z.B. auf Rollen, durch Stossen oder ziehen. Das Absenken oder Heben ist dagegen ein grosses Problem, wenn mit Kranmitteln im Gebäude nicht gearbeitet werden kann, mangels Höhe. Wie aus den Figuren 17a und 17b entnehmbar ist, kann dies in zwei Stufen einfach und ohne grosse Unfallrisiken durchgeführt werden. Dabei kann das schwere Gewicht G z.B. eine Transformerstation sein. Diese wird als erster Schritt auf Bodenhöhe abgeladen. Gleichzeitig wird im Gebäudeinneren eine Plattform mit vier Knickfüssen montiert, mit den vorderen Füssen an der Treppe anstossend zur Abfangung der horizontalen Verschiebekraft. Das Transportmittel wird nach Bedarf gegen eine horizontale Verschiebung gesichert, symbolisch mit einem Bremsklotz angedeutet. Die Absenkung erfolgt wie weiter oben mehrfach beschrieben ist. Die umgekehrte Reihenfolge ergibt sich beim Heben bzw. Aufladen von Lasten. Dieses Problem kann bereits bei Lasten von 100 kg oder mehreren 100 kg gegeben sein, wie z.B. Heizkessel. Der grosse Vorteil liegt darin, dass die senkrechte Hebefunktion in eine Zugfunktion umgewandelt wird. Entscheidend ist in allen Fällen, dass die Knickfüsse auf irgend eine Weise über Traversen usw. an der Last selbst oder an der Ladefläche verbindbar sind und kräftemässig sauber greifen. Die Zugkraft kann in vielen Fällen durch eine elektrische Winde oder eine Handwinde oder ein Hebeaggregat aufgebracht werden.

## Patentansprüche

1. Wechselstütze für Hoch- bzw. Tieflagen von Transportgütern auf Plattformen (30, 120), insbesondere für einen Transportaufbau (2, 2'), wobei die Wechselstütze (5, 5') über eine Gelenkachse (25, 27) verschwenkbar, mit der Plattform (30, 120) sowie einer Zugvorrichtung (10, 11) verbunden bzw. verbindbar ist,
**dadurch gekennzeichnet,**
**dass** die Wechselstütze (5, 5') einen, über die Gelenkachse (25, 27) nach oben abstehenden Zughebel (39) als Kraftarm (KA) aufweist und einen, in Bezug auf das wirksame Längenverhältnis von Lastarm (LA) zu Kraftarm (KA) veränderbaren Hebel bildet.

2. **Wechselstütze nach Anspruch 1,**
**dadurch gekennzeichnet,**
**dass** der Lastarm (LA) wenigstens ein oder mehrere Kniegelenke (22) aufweist und eine Kniehebelstütze bildet.

3. Wechselstütze nach Anspruch 1 oder 2,
**dadurch gekennzeichnet,**
**dass** vier Wechselstützen (5, 5') an dem unteren Bereich der Plattform (30, 120) bzw. eines Transportaufbaues (2, 2') verschwenkbar und gleichsinnig bewegbar angeordnet und mit Verschwenkhilfsmittel (10, 11, 12) verbindbar sind, derart, dass die Plattformen (30) bzw. der Transportaufbau (2, 2') über entsprechende Hebelbewegungen der Wechselstützen (5, 5') einerseits auf den Boden (9) oder einer Tieflage absenkbar und anderseits wieder in eine Hochlage bringbar ist.

4. Wechselstütze nach einem der Ansprüche 1 bis 3,
**dadurch gekennzeichnet,**
**dass** ein innerer Kniewinkel (α) des Lastarmes (LA) für die Betriebsstellung durch Gelenkanschläge (23, 23') mit einem Winkel grösser 90° begrenzbar ist.

5. Wechselstütze nach Anspruch 1,
**dadurch gekennzeichnet,**
**dass** wenigstens zwei Wechselstützen (5, 5') als Abrollschienen (40) ausgebildet sind, welche einen über die Gelenkachse (25, 27) an dem Aufbau hinaus verlängerten Zughebel (39) aufweisen.

6. Wechselstütze nach einem der Ansprüche 1 bis 5,
**dadurch gekennzeichnet,**
**dass** je zwei Wechselstützen (5, 5') auf je einer Seite des Aufbaues (2, 2') durch einen Parallelzug (12) verbunden sind, zur koordinierten Bewegung aller Kipphebelstützen, wobei die Verschwenkbewegung bevorzugt durch Stossen oder Ziehen über mechanische, elektrische oder hydraulische Verschwenkhilfsmittel (10, 11, 12) erfolgt.

7. Wechselstütze nach einem der Ansprüche 1 bis 6,
**dadurch gekennzeichnet,**
**dass** der Wechsel der Plattform (30) bzw. des Transportaufbaues (2, 2') von einer Hoch- in eine Tieflage oder umgekehrt durch Bildung einer Verspannung zwischen der Plattform (30) sowie einem Motorfahrzeug durchführbar ist, wobei die Verspannung vorzugsweise einerseits über eine parallel Zugvorrichtung (12) wirksam zwischen dem Motorfahrzeug (1) sowie dem äusseren Ende des Kraftarmes (KA), sowie anderseits einer Verschiebesicherung (13), wirksam beidseits zwischen dem Motorfahrzeug (1) sowie dem Lastarm (LA) der Wechselstütze (5, 5') erfolgt.

8. Wechselstütze nach Anspruch 7,
**dadurch gekennzeichnet,**
**dass** die Zugvorrichtung (12) wenigstens als Teilstück ein Zugseil (11) aufweist, weiches vorzugsweise am hinteren Fahrzeugende geführt, und besonders vorzugsweise kombiniert ist mit einer senkrechten, längenverstellbaren Fahrzeugstütze (103).

9. Wechselstütze nach Anspruch 1,
**dadurch gekennzeichnet,**
**dass** sie über zwei oder mehrere Gelenkachsen (22, 27) verbundene Schenkel aufweist, wobei die Schenkel (20, 21) mit Einschluss eines gelenkig verbundenen Zugarmes (39) bei Nichtgebrauch entgegengesetzt zur verspannter Stellung in aktivem Betriebszustand, paketartig zusammenklappbar ist.

10. Wechselstütze nach einem der Ansprüche 1 bis 9,
**dadurch gekennzeichnet,**
**dass** sie wenigstens eine oder mehrere Arretierungen aufweist, zur Sicherung (29) der Plattform (30, 120) bzw. des Transportaufbaues (2, 2') in einer Hoch- oder einer Zwischenlage.

11. Verwendung der Wechselstütze nach Anspuch 1 für das schnelle Wechseln von Transportgütern mit einem Transportträger für den Wechsel von Hoch- und Tieflagen,
**dadurch gekennzeichnet, dass**
a) der Übergang von der mobilen zu der immobilen Form einer Plattform (30, 120) bzw. eines Transportaufbaues (102) in eine Hochlage durch eine kleinhubige senkrecht wirkende Abhebe- und Absenkvorrichtung (111) erfolgt und
b) über eine Verschwenkbewegung von Wechselstützen (5, 5') einerseits auf den Boden (9) oder eine Tieflage abgesenkt und anderseits wieder in eine Hochlage gebracht wird.

12. Verwendung der Wechselstütze nach Anspruch 11,
**dadurch gekennzeichnet,**
**dass** die Wechselstützen (5, 5') als Teil einer Modulbauweise ausgebildet ist, welche wenigstens eine mit dem Fahrgestell (107) verbindbare Wechselbühne (110) aufweist, an der die Abhebe- und Absenkvorrichtung (111) sowie die Zentrierkegel (112) montierbar sind, wobei die Wechselbühne (110) auf dem Fahrgestell (107) vorzugsweise in dem Bereich des Einfederweges des Fahrgestelles (107) angeordnet ist, wobei die Wechselstützen (5, 5') bevorzugt wahlweise verwendbar sind, anstelle von senkrechten Stützbeinen (103).

13. Verwendung der Wechselstütze (5, 5') nach Anspruch 1, für das Aufladen und/oder Abladen insbesondere zum Absenken und Heben schwerer Lasten (G), wobei vier Wechselstützen (5, 5') drehbeweglich an eine Plattform (30, 120), eine Laderampe, einen Transportrahmen oder eine Platte über Gelenkachsen befestigt werden, und über eine Drehsicherung die Lasten kurzfristig ohne weitere äussere Kräfte in einer Hochlage haltbar sind.

14. Verwendung der Wechselstützen nach Anspruch 1, für Lastwagenpritschen oder Wechselmulden oder Container, oder für Zwischendecks in Aufbauten bzw. Containern für das Aufbocken eines Wohnanhängers, oder eines Wohnmobilaufbaues.

## Claims

1. Change-over support for moving into high or low positions goods to be transported on platforms (30, 120), in particular for a transport construction (2, 2'), wherein the change-over support (5, 5') can be swivelled via an articulated axis (25, 27) and is connected or can be connected to the platform (30, 120) and to a traction device (10, 11), **characterised in that** the change-over support (5, 5') comprises as a power arm (PA) a traction lever (39), protruding upwards beyond the articulated axis (25, 27), and forms a lever which is changeable in relation to the effective aspect ratio of work arm (WA) to power arm (PA).

2. Change-over support according to claim 1, **characterised in that** the work arm (WA) comprises at least one or more toggle joints (22) and forms a toggle lever support.

3. Change-over support according to claim 1 or 2, **characterised in that** four change-over supports (5, 5') are arranged at the lower region of the platform (30, 120) or of a transport construction (2, 2') in a swivelable manner and so as to be moveable in the same direction, and can be connected to a swivelling aid (10, 11, 12) in such a way that the platforms (30) or the transport construction (2, 2') can, via corresponding lever movements of the change-over supports (5, 5'), be lowered onto the base (9) or to a low position, on the one hand, and can be brought back to a high position, on the other.

4. Change-over support according to any one of claims 1 to 3, **characterised in that** an inner toggle angle (α) of the work arm (WA) can be limited for the operating position by joint stops (23, 23') having an angle greater than 90°.

5. Change-over support according to claim 1, **characterised in that** at least two change-over supports (5, 5') are formed as roll-off rails (40), which comprise a traction lever (39), extended via the articulated axis (25, 27) beyond the construction.

6. Change-over support according to any one of claims 1 to 5, **characterised in that** two respective change-over supports (5, 5') are connected to a respective side of the construction (2, 2') by a parallel traction (12), for coordinated movement of all of the toggle lever supports, wherein the swivelling movement preferably occurs through pushing or pulling via mechanical, electric or hydraulic swivelling means (10, 11, 12).

7. Change-over support according to any one of claims 1 to 6, **characterised in that** the alternation of the platform (30) or of the transport construction (2, 2') from a high position to a low position or vice versa can be carried out by forming a bracing between the platform (30) and a motor vehicle, wherein the bracing is preferably implemented on one side via a parallel traction device (12), effective between the motor vehicle (1) and the outer end of the power arm (PA), and on the other side via a sliding lock (13), effective on both sides between the motor vehicle (1) and the work arm (WA) of the change-over support (5, 5').

8. Change-over support according to claim 7, **characterised in that** the traction device (12) comprises, at least as a section, a traction cable (11), which is preferably led to the rear end of the vehicle, and is particularly preferably combined with a perpendicular vehicle support (103), the length of which can be adjusted.

9. Change-over support according to claim 1, **characterised in that** it comprises legs, connected via two or more articulated axes (22, 27), wherein the legs (20, 21), with the inclusion of an articulated traction arm (39), can be collapsed in a stacked manner when not in use, in contrast to the braced position that they adopt in the active operating state.

10. Change-over support according to any one of claims 1 to 9, **characterised in that** it comprises at least one or more locking devices for securing (29) the platform (30, 120) or the transport construction (2, 2') in a high or intermediate position.

11. Use of the change-over support according to claim 1 for the fast exchange of goods to be transported by means of a transport carrier for the alternation of high and low positions, **characterised in that**
a) the transition from the mobile to the immobile form of a platform (30, 120), or of a transport construction (102) into a high position, occurs by means of a small-lift, perpendicularly operating raising and lowering device (111), and
b) on the one hand, is lowered, via a swivelling movement of the change-over supports (5, 5'), onto the base (9) or to a low position, and, on the other hand, is brought back into a high position.

12. Use of the change-over support according to claim 11, **characterised in that** the change-over supports (5, 5') are formed as part of a module design, which comprises at least one alternating platform (110), which can be connected to the chassis (107), on which alternating platform the raising and lowering device (111) and the centring cones (112) can be assembled, wherein the alternating platform (110) is arranged on the chassis (107), preferably in the region of the spring deflection path of the chassis (107), wherein the change-over supports (5, 5') can preferably be selectively used as an alternative to perpendicular support legs (103).

13. Use of the change-over support (5, 5') according to claim 1, for the loading and/or unloading, in particular for the lowering and raising, of heavy loads (G), wherein four change-over supports (5, 5') are rotatably fastened via articulated axes to a platform (30, 120), a loading ramp, a transport frame or a plate, and the loads can be temporarily held in a high position via a rotation lock, without further external forces.

14. Use of the change-over supports according to claim 1, for HGV platforms or interchangeable troughs or containers, or for between-decks in constructions or containers for jacking up a caravan or a camper van construction.

## Revendications

1. Montant à positions alternantes permettant de soulever et d'abaisser des marchandises transportées sur des plates-formes (30, 120), en particulier pour une structure de transport (2, 2'), moyennant quoi le montant à positions alternantes (5, 5') peut basculer autour d'un axe d'articulation (25, 27), et est relié ou peut être raccordé à la plate-forme (30, 120) ainsi qu'à un dispositif de traction (10, 11),
**caractérisé en ce que**
le montant à positions alternantes (5, 5') comprend un levier de traction (39) comme bras d'entraînement (KA), s'écartant vers le haut par l'intermédiaire de l'axe d'articulation (25, 27) et un levier pouvant passer du bras de force (LA) au bras d'entraînement (KA) en fonction du rapport de longueur efficace.

2. Montant à positions alternantes selon la revendication 1,
**caractérisé en ce que**
le bras de puissance (LA) comprend au moins une ou plusieurs genouillère(s) (22) et forme un montant de levier coudé.

3. Montant à positions alternantes selon la revendication 1 ou 2,
**caractérisé en ce que**
quatre montants à positions alternantes (5, 5') sont disposés de manière à pouvoir basculer et se déplacer dans le même sens sur la zone inférieure de la plate-forme (30, 120) ou d'une structure de transport (2, 2') et peuvent être reliés aux moyens de basculement (10, 11, 12), de telle sorte que les plates-formes (30) ou la structure de transport (2, 2') puisse(puissent) être abaissée(s) d'un côté sur le sol (9) ou dans une position inférieure par l'intermédiaire de déplacements de levier correspondants des montants à positions alternantes (5, 5'), et être amenée(s) d'un autre côté à nouveau dans une position supérieure.

4. Montant à positions alternantes selon l'une des revendications 1 à 3,
**caractérisé en ce**
**qu'**un angle coudé (α) intérieur du bras de puissance (LA) pour la position de fonctionnement peut être limité par des butées d'articulation (23, 23') présentant un angle supérieur à 90°.

5. Montant à positions alternantes selon la revendication 1,
**caractérisé en ce**
**qu'**au moins deux montants à positions alternantes (5, 5') sont réalisés sous forme de rails de roulement (40), lesquels comprennent un levier de traction (39) se prolongeant au-delà de l'axe d'articulation (25, 27) sur la structure.

6. Montant à positions alternantes selon l'une des revendications 1 à 5,
**caractérisé en ce que**
respectivement deux montants à positions alternantes (5, 5') sont reliés sur chaque côté de la structure (2, 2') par une traction parallèle (12), afin de coordonner le déplacement de tous les montants à queue de lion, moyennant quoi le basculement se fait de préférence par un mouvement de poussée ou de traction par l'intermédiaire de moyens de basculement (10, 11, 12) mécaniques, électriques ou hydrauliques.

7. Montant à positions alternantes selon l'une des revendications 1 à 6,
**caractérisé en ce que**
le fait de faire passer la plate-forme (30) ou la structure de transport (2, 2') d'une position supérieure à une position inférieure ou inversement peut être réalisé en créant une tension entre la plate-forme (30) et un véhicule à moteur, moyennant quoi la tension se fait de préférence d'un côté par l'intermédiaire d'un dispositif de traction parallèle (12) agissant entre le véhicule à moteur (1) et l'extrémité extérieure du bras d'entraînement (KA), et d'un autre côté par un frein de déplacement (13), agissant des deux côtés entre le véhicule à moteur (1) et le bras de puissance (LA) du montant à positions alternantes (5, 5').

8. Montant à positions alternantes selon la revendication 7,
**caractérisé en ce que**
le dispositif de traction (12) comprend au moins comme élément un câble de traction (11), lequel est guidé de préférence sur l'extrémité arrière du véhicule, et est associé de manière particulièrement préférée à un montant de véhicule (103) vertical, pouvant être réglé en longueur.

9. Montant à positions alternantes selon la revendication 1,
**caractérisé en ce**
**qu'**il comprend des branches reliées par l'intermédiaire de deux axes d'articulation (22, 27) ou plus, moyennant quoi la branche (20, 21) comprenant un bras de traction (39) relié de manière articulée peut être rabattue sous forme de paquet lorsqu'elle n'est pas utilisée, contrairement à sa position tendue lorsqu'elle est utilisée activement.

10. Montant à positions alternantes selon l'une des revendications 1 à 9,
**caractérisé en ce**
**qu'**il comprend au moins un ou plusieurs dispositif(s) d'arrêt, permettant de fixer (29) la plate-forme (30, 120) ou la structure de transport (2, 2') dans une position supérieure ou intermédiaire.

11. Utilisation du montant à positions alternantes selon la revendication 1 pour le passage rapide de marchandises transportées, comprenant un support de transport pour le passage entre les positions supérieures et inférieures,
**caractérisée en ce que**
a) le transfert de la forme mobile à la forme immobile d'une plate-forme (30, 120) ou d'une structure de transport (102) se fait dans une position supérieure par un dispositif de levage et d'abaissement (111) agissant verticalement sur une faible élévation et
b) par l'intermédiaire d'un basculement des montants à positions alternantes (5, 5'), il se fait d'un côté un abaissement sur le sol (9) ou dans une position inférieure et d'un autre côté, à nouveau une élévation dans une position supérieure.

12. Utilisation du montant à positions alternantes selon la revendication 11,
**caractérisée en ce que**
les montants à positions alternantes (5, 5') sont réalisées en faisant partie d'une construction modulaire, laquelle comprend au moins une passerelle à positions alternantes (110) pouvant être reliée au châssis du véhicule (107), sur laquelle sont montés les dispositifs de levage et d'abaissement (111), ainsi que le cône central (112), moyennant quoi la passerelle à positions alternantes (110) est disposée sur le châssis de véhicule (107) de préférence dans la zone du trajet de compression du ressort du châssis de véhicule (107,), moyennant quoi les montants à positions alternantes (5, 5') peuvent être utilisés de préférence en option, à la place de béquilles (103) verticales.

13. Utilisation du montant à positions alternantes (5, 5') selon la revendication 1, pour le chargement et/ou le déchargement, en particulier pour l'abaissement et le levage de charges (G) lourdes, moyennant quoi quatre montants à positions alternantes (5, 5') sont fixés de manière rotative par des axes articulations sur une plate-forme (30, 120), une rampe de chargement, un châssis de transport ou une plaque, et les charges peuvent être supportées à court terme dans une position supérieure sans nécessiter de forces extérieures par l'intermédiaire d'un frein de rotation.

14. Utilisation des montants à positions alternantes selon la revendication 1, pour des carrosseries à plate-forme de camion ou des bennes alternantes ou des containeurs, ou pour des entreponts dans des structures ou des containeurs pour le levage avec un cric d'une remorque de camping ou d'une structure de camping-car.
